(19) Europäisches Patentamt / European Patent Office / Office européen des brevets

(11) **EP 3 287 237 B1**

(12) **FASCICULE DE BREVET EUROPEEN**

(45) Date de publication et mention
de la délivrance du brevet:
**14.08.2019 Bulletin 2019/33**

(51) Int Cl.:
**B25B 21/00** *(2006.01)*     **B25B 23/147** *(2006.01)*
**B23P 19/06** *(2006.01)*     **G01L 5/24** *(2006.01)*

(21) Numéro de dépôt: **17187361.5**

(22) Date de dépôt: **22.08.2017**

(54) **DISPOSITIF DE VISSAGE À MESURE DE COUPLE DE SORTIE OPTIMISÉE, ET PROCÉDÉ DE DÉTERMINATION DU COUPLE DE SORTIE CORRESPONDANT**

SCHRAUBVORRICHTUNG MIT OPTIMIERTER MESSUNG DES AUSGANGSDREHMOMENTS, UND ENTSPRECHENDES VERFAHREN ZUR BESTIMMUNG DES AUSGANGSDREHMOMENTS

SCREWING DEVICE WITH OPTIMISED OUTPUT TORQUE MEASUREMENT, AND METHOD FOR DETERMINING THE CORRESPONDING OUTPUT TORQUE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.08.2016 FR 1657862**

(43) Date de publication de la demande:
**28.02.2018 Bulletin 2018/09**

(73) Titulaire: **Etablissements Georges Renault
44800 Saint Herblain (FR)**

(72) Inventeurs:
• **ALLENOU, Benoît
44700 ORVAULT (FR)**
• **MAHOT, Pierre
44700 ORVAULT (FR)**
• **JOUSSET, Nicolas
44220 COUERON (FR)**

(74) Mandataire: **Vidon Brevets & Stratégie
16B, rue de Jouanet
BP 90333
35703 Rennes Cedex 7 (FR)**

(56) Documents cités:
**EP-A1- 2 716 414**     **EP-A2- 2 826 596**
**DE-A1-102014 209 009**

EP 3 287 237 B1

**Description**

**1. Domaine de l'invention**

Le domaine de l'invention est celui de la conception et de la fabrication de dispositifs de vissage asservis et des procédés de vissage ou de contrôle de vissage.

**2. Art antérieur**

Les exigences en termes de précision de vissage, de flexibilité et de contrôle qualité dans le domaine industriel, tel que celui de l'automobile ou de l'aéronautique, ont conduit au développement de dispositifs de vissage asservis.

Les dispositifs de vissage asservis comprennent classiquement un contrôleur et un dispositif de vissage pouvant être mis en oeuvre pour réaliser des cycles de vissage selon des stratégies de vissage programmées dans le contrôleur. Dans le cas des visseuses asservies à batterie le contrôleur est intégré dans la visseuse (dispositif de vissage).

Un cycle de vissage comprend généralement deux phases principales :

- une phase de prévissage à vitesse rapide jusqu'à ce que la tête de la vis vienne en applique contre la pièce à assembler, puis
- une phase de serrage finale à vitesse plus lente, de l'ordre de 10% de la vitesse maximum du dispositif de vissage, jusqu'à l'atteinte du couple de serrage souhaité appelé couple de serrage objectif.

Les dispositifs de vissage asservis comprennent également divers moyens de mesure de multiples variables impliquées dans le serrage d'un assemblage pour assurer le pilotage et/ou le contrôle de celui-ci. Au rang de ces variables figure le couple de serrage auquel une vis est serrée au cours d'un cycle de vissage. Ces dispositifs de vissage intègrent donc généralement des moyens pour mesurer ce couple de serrage.

De tels moyens de mesure du couple de serrage comprennent un capteur de couple de serrage intégré à la transmission du dispositif de vissage.

Au cours d'un cycle de vissage, ce capteur délivre un signal représentatif du couple de serrage délivré par le dispositif de vissage. Ce signal est comparé par le contrôleur à un seuil prédéterminé correspondant au couple de serrage objectif auquel il est souhaité de serrer un assemblage. Lorsque la valeur de ce signal atteint ce seuil prédéterminé, ce qui signifie que le couple de serrage objectif est atteint, le contrôleur modifie l'alimentation du moteur du dispositif de vissage de telle sorte que le rotor du moteur s'arrête le plus rapidement possible.

Un arrêt immédiat du rotor du moteur étant physiquement impossible, le rotor du moteur continu de tourner sur un certain angle au-delà de la position à laquelle le couple de serrage objectif est atteint. Cet angle de rotation du moteur après l'activation de l'arrêt de celui-ci génère un angle de sur-serrage de la vis et un sur-couple de serrage dépassant le couple de serrage objectif. Ce dépassement du couple de serrage objectif est appelé « over-shoot ».

Les fabricants n'ont de cesse que de procurer des systèmes de vissage minimisant l'over-shoot ou garantissant à tout le moins la conservation de l'over-shoot dans une plage de tolérances acceptable.

Un capteur de couple comprend classiquement un élément déformant muni d'un pont de jauges de contrainte. Cet élément déformant est un composant métallique intégré dans la structure du dispositif de vissage (encore appelé outil ou visseuse) de façon fixe et supportant des efforts dans la chaine de transmission générés par la montée en couple du serrage.

L'élément déformant se déforme au cours d'un cycle de vissage proportionnellement au couple de serrage délivré par le dispositif de vissage et le pont de jauges de contrainte produit en conséquence un signal électrique représentatif du couple de serrage généré par la visseuse.

Les dispositifs de vissage comprennent généralement :

- un carter;
- un moteur électrique synchrone à aimant permanent muni d'un capteur de mesure de l'angle du rotor par rapport au stator du moteur ;
- une réduction à train épicycloïdal pour augmenter le couple électromagnétique produit par le moteur et diminuer en proportion sa vitesse de rotation ;
- un onduleur alimentant le stator du moteur en fonction de la position angulaire du rotor par rapport au stator et en fonction d'une consigne déterminée par les paramètres de vissage programmés dans le contrôleur.

Selon les applications, le carter d'un dispositif de vissage peut-être fixe ou mobile dans l'espace. Un ou plusieurs dispositifs de vissage peuvent ainsi être fixés sur un support fixe ou mobile comme par exemple une machine de vissage. Une telle machine de vissage, lorsqu'elle comprend plusieurs dispositifs de vissage, peut notamment être utilisée pour assurer le vissage simultané de plusieurs vis sur un même composant comme par exemples une roue de véhicule automobile, la culasse d'un moteur, un volant moteur...

L'intégration à la transmission du capteur de couple peut être réalisée selon deux d'architectures à savoir :

- une architecture dite à élément déformant externe, et
- une architecture dite à couronne flottante.

**Visseuse à élément déformant externe**

Il existe deux types de dispositifs de vissage, ou visseuses, à élément déformant externe, à savoir :

- les dispositifs de vissage coaxiaux dont l'arbre de sortie et l'arbre moteur s'étendent selon un même axe ; ce type de dispositifs de vissage existe depuis plusieurs dizaines d'années, et
- les dispositifs de vissages non coaxiaux dont l'arbre de sortie et l'arbre moteur s'étendent selon des axes parallèles et distants; ce type de dispositifs de vissage, qui a été développé plus récemment, permet d'obtenir un entraxe entre les arbres de sortie de deux broches plus faible qu'avec le type précédent.

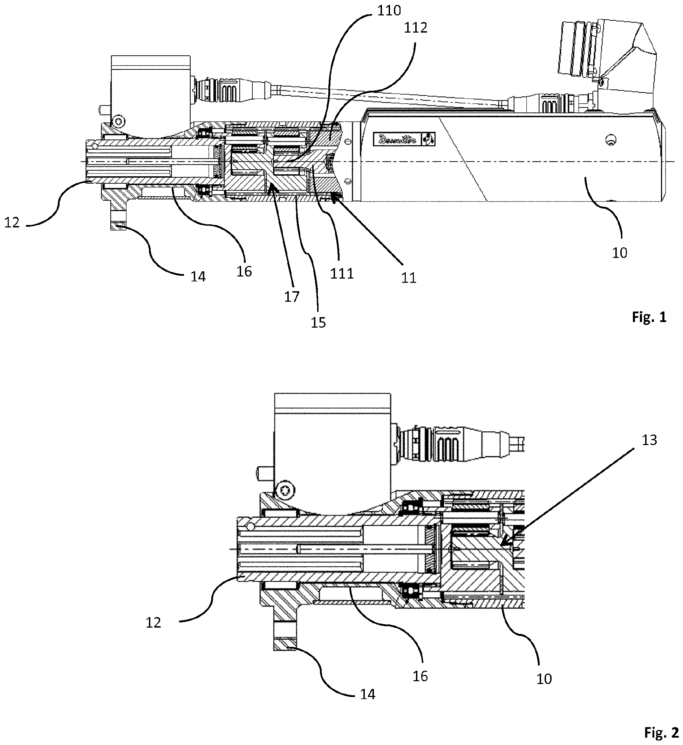

Les figures 1 et 2 illustrent un dispositif de vissage coaxial à élément déformant externe.

Un tel dispositif comprend un carter 10 logeant un moteur 11 avec un stator 112 et un rotor 111 muni d'un arbre moteur 110, un arbre de sortie 12 susceptible d'entrainer en rotation un douille de vissage, et une transmission à trains épicycloïdaux 13 reliant l'arbre moteur 110 à l'arbre de sortie 12. La couronne 15 des trains épicycloïdaux est solidaire en rotation de la portion du carter 10 logeant le groupe motoréducteur comprenant le moteur et la transmission. Le carter 10 comprend une platine de fixation 14 permettant la solidarisation du dispositif de vissage à un support qui peut-être fixe ou mobile.

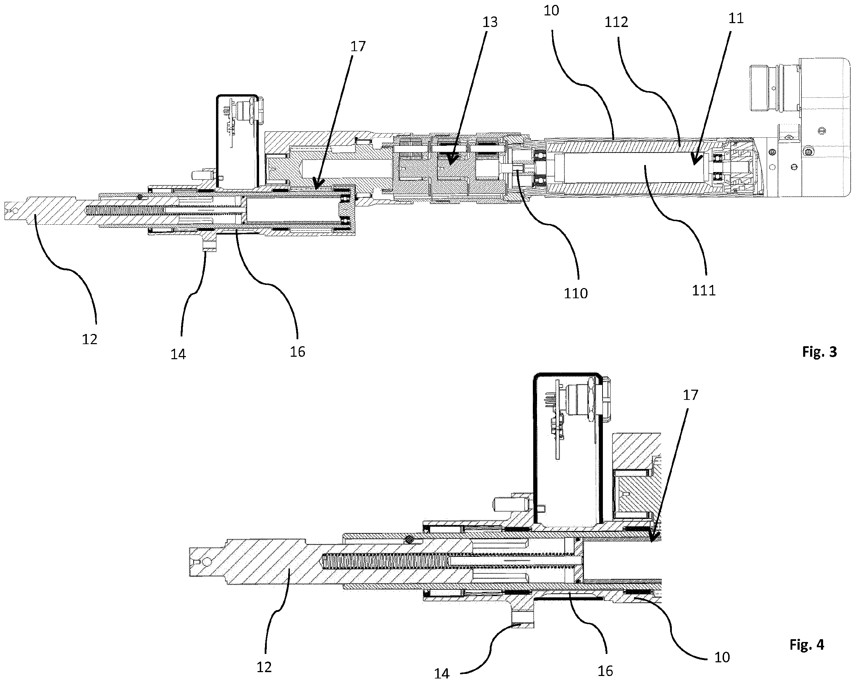

Les figures 3 et 4 illustrent un dispositif de vissage non coaxial à élément déformant externe.

Ce dispositif comprend un carter 10 logeant un moteur 11 avec un stator 112 et un rotor 111 muni d'un arbre moteur 110, un arbre de sortie 12 susceptible d'entrainer en rotation un douille de vissage, et une transmission à trains épicycloïdaux 13 reliant l'arbre moteur à l'arbre de sortie. Un train de deux engrenages parallèles 17 relit la sortie de la transmission à trains épicycloïdaux 13 à l'arbre de sortie 12 de manière telle que l'arbre de sortie 12 et l'arbre moteur 110 s'étendent selon deux axes parallèles et distants. En conséquence, le sens de rotation de l'arbre de sortie 12 est opposé à celui du moteur 110. La couronne 15 des trains épicycloïdaux est solidaire en rotation de la portion du carter 10 logeant le groupe motoréducteur comprenant le moteur et la transmission. Le carter 10 comprend une platine de fixation 14 permettant la solidarisation du dispositif de vissage à un support qui peut-être fixe ou mobile.

Les dispositifs de vissages non coaxiaux à élément déformant externe trouvent leur utilité dans le serrage simultané d'un groupe de vis présentant un entraxe faible, par exemple des vis de fixation de volant moteur. Dans ces cas, il arrive que le diamètre du moteur ou de la réduction d'un dispositif de vissage coaxiale ne permette pas un rapprochement suffisant des arbres de sortie des dispositifs de vissage. Les dispositifs de vissage non-coaxiaux permettent le rapprochement des arbres de sortie des dispositifs de vissage sur un diamètre de répartition de vis faible. En effet, les axes des carters de moteur ou de réducteur, du fait de leur désaxage avec l'arbre de sortie des dispositifs de vissage, se retrouvent placés sur un diamètre plus grand que le diamètre sur lequel se trouvent les axes des arbres de sortie des dispositifs de vissage, c'est-à-dire le diamètre de répartition des vis. Le désaxage des arbres de sorties des dispositifs de vissage non coaxiaux par rapport à l'axe de leur moteur ou réducteur les rend ainsi compatibles avec des applications de serrage de vis réparties sur un faible diamètre.

Dans un dispositif de vissage coaxial à élément déformant externe comme dans un dispositif de vissage non coaxial à élément déformant externe, l'élément déformant 16 du capteur de couple, qui porte un pont de jauges de contrainte, est généralement placé entre la platine de fixation 14 et la portion de carter 10 logeant le motoréducteur, l'arbre de sortie 12 passant au travers de cet élément déformant. Cet élément déformant présente généralement une forme cylindrique.

Au cours d'un cycle de vissage, l'élément déformant se déforme proportionnellement au couple de serrage appliqué sur la vis et le pont de jauges délivre un signal proportionnel à ce couple de serrage. Le couple de serrage ainsi mesuré au moyen du capteur de couple est d'une part utilisé pour commander l'arrêt du moteur lorsque le couple de serrage objectif est atteint et d'autre part enregistré dans un compte rendu de vissage qui permet notamment d'assurer un contrôle qualité de chaque vissage.

Il a été récemment constaté que l'utilisation de dispositifs de vissage non coaxiaux à élément déformant externe peut conduire à l'établissement d'un compte rendu de vissage mentionnant un couple de serrage final au-delà d'une tolérance prédéterminée.

Ces constatations ont été faites avec une vitesse, durant la phase de serrage finale, plus élevée qu'usuellement. Ces tests avaient pour but d'évaluer l'usage de vitesses plus fortes pour améliorer la productivité, ces vitesses impliquaient un freinage moteur d'autant plus fort pour limiter l'overshoot.

Ces constations ont été faites sur un banc d'essais permettant de réaliser des cycles de vissages type (c'est-à-dire avec des caractéristiques prédéfinies) sur un assemblage étalon (c'est-à-dire avec des caractéristiques prédéfinies) et de mesurer le couple de serrage de deux façons différentes :

- d'une part au moyen du capteur de couple à élément déformant intégré au dispositif de vissage, et
- d'autre part au moyen d'un capteur de couple étalon placé entre l'assemblage et le dispositif de vissage, celui-ci permettant de réaliser une mesure au plus prêt de l'assemblage et donc plus juste.

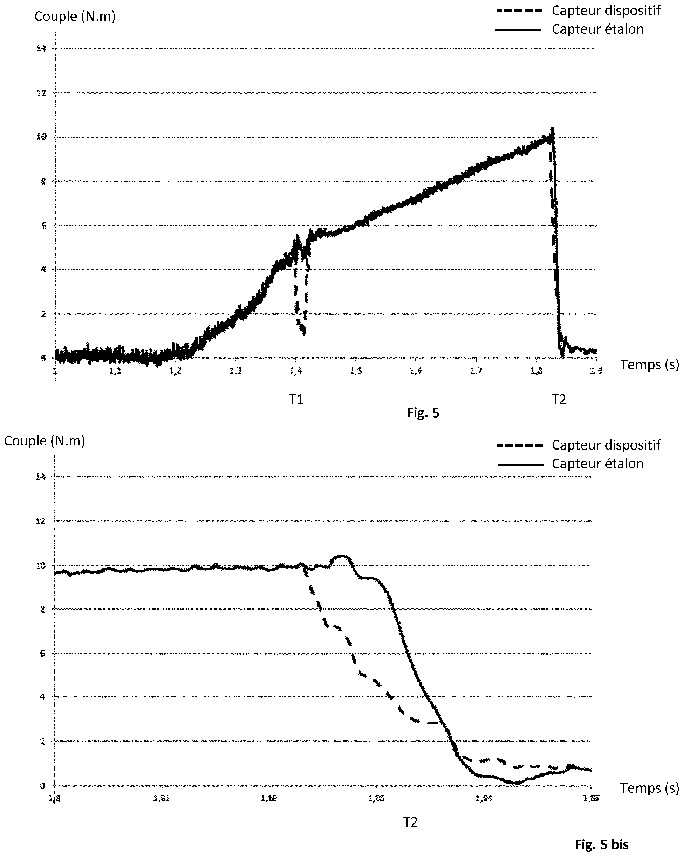

Les essais réalisés au moyen d'un dispositif de vissage coaxial à élément déformant externe conduisaient à l'enregistrement des courbes illustrées aux figures 5 et 5bis sur lesquelles la courbe en trait plein et la courbe en pointillés représentent la variation du couple de serrage au cours d'un cycle de vissage respectivement mesurée au moyen du capteur étalon et du capteur intégré au dispositif de vissage.

On constate une disparité à deux instants entre le couple de serrage mesuré par le capteur intégré à la broche et celui mesuré par le capteur étalon, à savoir :

- à l'instant T1 correspondant à la transition entre la phase de prévissage et la phase de serrage final ;
- à l'instant T2 correspondant à l'instant où le moteur est arrêté à l'issue de la phase de serrage final lorsque le couple de serrage objectif est atteint.

Aux instants T1 et T2, le couple mesuré par le capteur intégré au dispositif de vissage est nettement inférieur au couple de serrage mesuré par le capteur étalon.

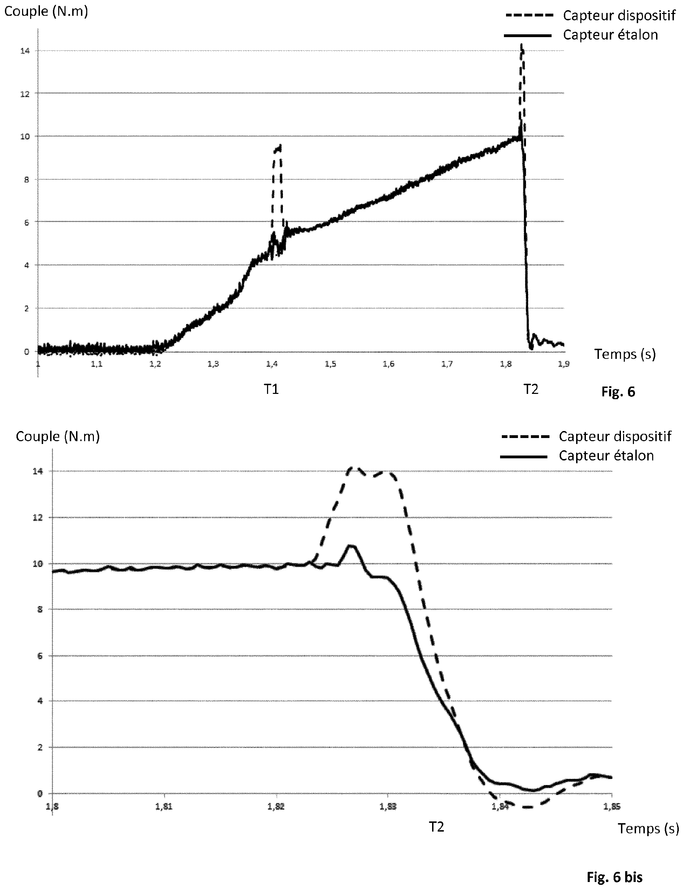

Les essais réalisés au moyen d'un dispositif de vissage non coaxial à élément déformant externe conduisaient à l'enregistrement des courbes illustrées aux figures 6 et 6 bis sur lesquelles la courbe en trait plein et la courbe en pointillés représentent la variation du couple de serrage au cours d'un cycle de vissage respectivement mesurée au moyen du capteur étalon et du capteur intégré au dispositif de vissage.

Tout comme dans le cadre de la mise en oeuvre d'un dispositif de vissage coaxial à élément déformant externe, on constate une disparité entre les couples mesurés aux instants T1 et T2.

Aux instants T1 et T2, le couple mesuré par le capteur intégré au dispositif de vissage est nettement supérieur au couple de serrage mesuré par le capteur étalon.

Dans le cas d'un serrage final, avec une forte vitesse, évalué lors de ces essais, il apparaissait une disparité entre la valeur du couple de serrage réel (mesuré au moyen du capteur étalon) et la valeur du couple de serrage mesuré avec le capteur de couple intégré au dispositif de vissage à élément déformant externe qu'il soit de type coaxial ou de type non coaxial. Ceci était de nature à nuire à la précision des comptes rendus de vissage enregistrés par le système de vissage sans toutefois nuire à la précision du couple appliqué sur la vis.

En effet, à l'issue d'un cycle de vissage, le contrôleur enregistre, comme couple de serrage final, le couple de serrage le plus élevé enregistré au cours du vissage au moyen du capteur de couple intégré au dispositif de vissage.

Dans l'exemple illustré aux figures 5 et 5 bis, qui correspond à un vissage au moyen d'un dispositif de vissage coaxial à élément déformant externe avec un couple de serrage objectif fixé à 10 N.m., le couple maximal mesuré par le capteur intégré au dispositif de vissage est de l'ordre de 10 N.m.. Pourtant, le couple de serrage maximum mesuré par le capteur étalon se situe à environ 11 N.m., ce qui signifie qu'il existe un overshoot de 1 N.m.. Le compte rendu de vissage d'un dispositif de vissage coaxial à élément déformant extenre ne fait ainsi pas état de l'overshoot à tout le moins dans sa totalité si bien que le compte rendu de vissage est erroné.

Dans l'exemple illustré aux figures 6 et 6 bis, qui correspond à un vissage au moyen d'un dispositif de vissage non coaxial à élément déformant externe avec un couple de serrage objectif fixé à 10 N.m., le couple maximal mesuré par le capteur intégré au dispositif de vissage est de l'ordre de 14 N.m., ce qui laisse supposer un overshoot de 4 N.m.. Pourtant, le couple de serrage maximum mesuré par le capteur étalon se situe à environ 11 N.m., ce qui signifie qu'il existe un overshoot réel de 1 N.m.. Le compte rendu de vissage d'un dispositif de vissage non coaxial à élément déformant externe fait ainsi état d'un overshoot nettement supérieur à l'overshoot réel si bien que le compte rendu de vissage est erroné.

Dans le cas d'un serrage final avec une vitesse forte évalué lors de ces essais, le compte rendu de vissage d'un dispositif de vissage coaxial ou non coaxial à élément déformant externe était erroné. Il doit pourtant pouvoir être utilisé pour contrôler la qualité de chaque vissage et pour corriger un éventuel serrage incorrect. Il est donc important que le couple de serrage mesuré par le capteur intégré au dispositif de vissage soit aussi proche que possible du couple de serrage réellement appliqué à la vis.

Comme cela va apparaître par la suite, cet écart entre la valeur du couple réellement appliqué sur la vis et le couple de serrage enregistré dans le compte rendu de vissage découle de phénomènes dynamiques produits par le freinage du moteur, autrement dit après que le couple de serrage objectif ait été atteint, qui n'affectent que le compte rendu de vissage.

Il existe toutefois un besoin pour améliorer la qualité de la mesure du couple de serrage d'un dispositif de vissage à élément déformant externe qu'il soit coaxial ou non-coaxial au moyen d'un capteur intégré à celui-ci.

**Visseuses à couronne flottante**

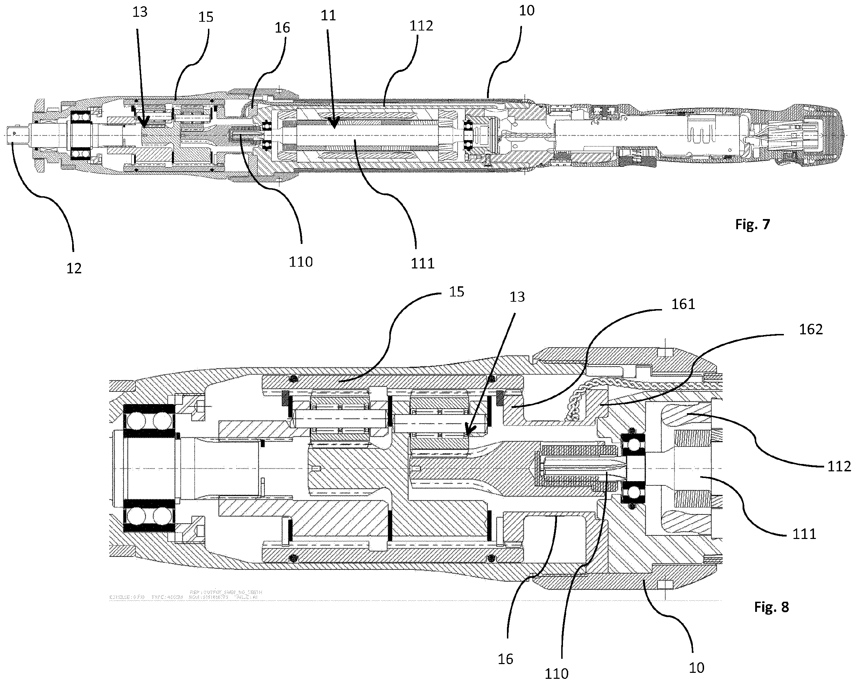

Les figures 7 et 8 illustrent respectivement un dispositif de vissage, ou visseuse, électrique à couronne flottante et un agrandissement d'une portion de sa transmission intégrant un capteur de couple à élément déformant.

Une telle visseuse comprend classiquement un carter 10 logeant un moteur 11 avec un stator 112 et un rotor 111 muni d'un arbre moteur 110, un arbre de sortie 12 susceptible d'entrainer en rotation un douille de vissage, et une transmission à trains épicycloïdaux 13 reliant l'arbre moteur 110 à l'arbre de sortie.

La couronne 15 des trains épicycloïdaux est solidaire en rotation à l'une de ses extrémités à une première extrémité 161 d'un élément déformant 16, une deuxième extrémité 162 de l'élément déformant 16 étant liée de manière fixe au carter 10. La couronne 15 n'est pas directement liée au carter 10 à sa périphérie. Elle est ainsi montée flottante à l'intérieur du carter 10 et peut tourner autour de son axe à l'intérieur du carter sous l'effet d'une déformation de l'élément déformant. L'élément déformant 16 porte un pont de jauges de contrainte.

Le carter 10 peut-être fixe ou mobile. Il peut être fixé à un support fixe ou mobile comme par exemple dans le cadre d'une visseuse portable.

Dans le mode de réalisation illustré aux figures 7 et 8, l'axe de l'arbre de sortie 12 est confondu avec l'axe de rotation du moteur, comme dans le cas d'un dispositif de vissage coaxial à élément déformant externe : il s'agit alors d'un dispositif de vissage coaxial à couronne flottante.

Dans une variante non illustrée, l'arbre de sortie et l'arbre moteur s'étendent selon des axes parallèles et distants, comme dans le cas d'un dispositif de vissage non coaxial à élément déformant externe : il s'agit alors d'une dispositif de vissage coaxial à couronne flottante.

Au cours d'un cycle de vissage, le couple de réaction généré sur la couronne lors de la montée en couple est supporté par l'élément déformant. Celui-ci se déforme en conséquence proportionnellement au couple de serrage délivré par la visseuse. Le pont de jauges de contrainte délivre alors un signal électrique qui est proportionnel au couple de serrage délivré par la visseuse.

Le couple de sortie de la visseuse est proportionnel au couple mesuré par le capteur selon la formule suivante :

$$C_{Sortie} = C_{Capteur} + C_{Moteur}$$

$$C_{Sortie} = R.\,\mu.\,C_{Moteur}$$

$$C_{Sortie} = C_{Capteur}/(1 - \frac{1}{R.\,\mu})$$

Avec

$C_{Sortie}$ :    Couple de sortie de réduction, ce qui dans le cas d'un dispositif de vissage droit (carter de type droit et non de type poignée pistolet) équivaut au couple appliqué sur la vis

$C_{Moteur}$ :    Couple généré par l'arbre de sortie moteur

$C_{Capteur}$ :    Couple mesuré par le capteur

R :    Ratio de réduction du train épicycloïdal

$\mu$ :    Rendement de transmission de la réduction

Cette formule permet de considérer que pour les visseuses à couronne flottante le couple de sortie est proportionnel au couple mesuré par le capteur, et de calibrer la visseuse en conséquence.

La proportionnalité entre le couple de serrage appliqué à la vis et le couple de serrage mesuré par le capteur de couple intégré à la visseuse est cependant affectée par d'éventuelles variations sur le rendement de la transmission de la réduction de la visseuse. Ceci oblige à contrôler et éventuellement recalibrer périodiquement la visseuse pour tenir compte d'éventuelles variations de ce rendement et les corriger.

Un tel recalibrage est chronophage et représente un poste de coût non négligeable. En outre, s'il n'est pas réalisé de manière régulière ou correcte, une disparité entre le couple de serrage mesuré et le couple de serrage réel appliqué à la vis peut exister et conduire ainsi à une imprécision du serrage. Pourtant, le couple de serrage mesuré est enregistré en tant que couple de serrage final dans le compte rendu de vissage et doit être aussi proche que possible du couple réel de serrage appliqué à la vis.

Par conséquent, il existe un besoin d'améliorer la qualité de la mesure du couple de serrage appliqué par un dispositif de vissage, qu'il s'agisse d'un dispositif de vissage coaxial ou non coaxial à élément déformant externe ou à couronne flottante.

## 3. Objectifs de l'invention

L'invention a notamment pour objectif d'apporter une solution efficace à au moins certains de ces différents problèmes.

En particulier, selon au moins un mode de réalisation, propre aux dispositifs de vissage à élément déformant externe, un objectif de l'invention est de fournir un dispositif de vissage intégrant des moyens de mesure du couple de serrage donnant une mesure plus précise du couple de serrage.

L'invention a pour objectif, selon au moins un mode de réalisation, propre aux dispositifs de vissage à couronne flottante, de fournir un tel dispositif de vissage qui ne nécessite pas d'être régulièrement ré-étalonné pour produire une mesure précise du couple de serrage.

Un autre objectif de l'invention est, selon au moins un mode de réalisation, de fournir un tel dispositif de vissage qui soit simple et fiable.

## 4. Présentation de l'invention

Pour ceci, l'invention propose un dispositif selon la revendication 1.

Ainsi, l'invention repose sur une approche originale qui consiste à déterminer le couple de serrage d'une visseuse électrique en tenant compte d'une part de la mesure du couple réalisée avec un capteur de couple classiquement intégré au dispositif de vissage (élément déformant externe ou couronne flottante) et d'autre part de l'accélération ou la décélération du rotor du moteur.

Bien entendu, la mesure du couple au moyen du capteur et la mesure de l'accélération ou décélération ont lieu simultanément ou sensiblement simultanément.

Comme cela a été exposé plus haut en relation avec les figures 5, 5 bis, 6 et 6 bis, les Inventeurs se sont récemment aperçu que les techniques classiquement mises en oeuvre depuis des dizaines d'années pour mesurer le couple de serrage délivré par un visseuse coaxiale ou non coaxiale à élément déformant externe pouvaient induire l'apparition d'une divergence entre le couple de serrage final réel d'un assemblage et le couple de serrage final enregistré dans le compte rendu de vissage si bien que ces techniques étaient améliorables.

Cette divergence résulte de l'apparition dans la mesure du couple de pics de couple au passage de la phase de prévissage à la phase de serrage final et au moment du freinage du moteur à la fin de la phase de serrage final. Ces pics de couple, qui ne correspondent pas à la réalité du couple appliqué sur la vis, n'affecte donc que le compte rendu de vissage et non la qualité du serrage en tant que tel.

Dans le but d'améliorer la précision de la mesure du couple de serrage, les inventeurs ont en premier lieu eu l'idée de réaliser un traitement du signal de manière à éliminer ces pics de couple des courbes illustrant la variation dans le temps du couple de serrage mesuré. Une telle approche n'est toutefois pas satisfaisante car elle consiste à masquer des phénomènes réels.

Dans le cadre d'essais, toujours de visseuses à élément déformant externe sur un banc d'essais, en comparant les des signaux de couple venant d'une part du capteur de couple intégré aux visseuses et d'autre part du capteur de couple du banc d'essais mesurant le couple réellement fourni par l'arbre de sortie de la visseuse, les inventeurs ont noté que les divergences entre les deux couples (celui mesuré par le capteur intégré à la visseuse et celui mesuré par le capteur du banc) apparaissaient lors des fortes variations de vitesse de rotation du moteur au cours d'un cycle de vissage.

Les inventeurs ont alors pensé à faire varier la manière dont cette variation de vitesse se produisait soit en la diminuant soit en l'augmentant. Ils ont constaté que plus la variation de vitesse était brutale, plus l'amplitude des pics de couple était importante. Inversement, plus la variation de vitesse était douce, plus l'amplitude des pics de couple était faible.

Les inventeurs en ont déduit que les différences entre couple de serrage réellement appliqué sur la vis par une visseuse à élément déformant externe et le couple de serrage enregistré dans le compte rendu de vissage découlaient de phénomènes dynamiques provoqués par le freinage du moteur après l'application d'une vitesse finale élevée.

Fort de ce constat, les Inventeurs ont eu l'idée de réaliser un freinage moins brutal à l'issue de la phase de serrage final pour réduire l'imprécision de la mesure du couple à cet instant primordial du cycle de vissage. Une telle pratique augmente toutefois l'overshoot en fin de vissage puisque la période à partir du début du freinage pendant laquelle le moteur continu de tourner jusqu'à ce qu'il s'arrête, période au cours de laquelle le vissage se poursuit, augmente. En outre, une telle pratique allonge la durée d'un cycle de vissage et nuit à la productivité, ce qui n'est pas souhaité.

Les Inventeurs ont alors cherché une autre solution.

Bien que les concepteurs de visseuses mettent systématiquement en oeuvre la même technique de mesure du couple de serrage depuis plusieurs dizaines d'années, sans étudier de manière fine les phénomènes dynamiques impliqués dans le fonctionnement d'une visseuse, puisque cette solution semblait jusque là convenir, les Inventeurs, forts de leur constatation selon laquelle le niveau de décélération du moteur aurait une incidence sur le niveau d'imprécision de la mesure du couple de serrage, ont mené une étude de ce type.

En appliquant le principe fondamental de la dynamique au système formé par une visseuse à élément déformant externe d'axe parallèle à l'axe de rotation du moteur et ses composants mécaniques, on obtient la relation suivante, relative à la somme des moments autour de l'axe du capteur :

$$C_{Sortie} = C_{Capteur} + \sum J_{Composant}.\dot{\omega}_{Composant}$$

Avec

$C_{Sortie}$ :     Couple de sortie du dispositif de vissage

$C_{Capteur}$ :     Couple mesuré par le capteur intégré au dispositif de vissage

$J_{Composant}$     Inertie rotorique des composants suivant leur axe de rotation, par construction leur axe est parallèle à l'axe du capteur

$\dot{\omega}_{Composant}$     Décélération des composants dans un repère galiléen

Or le composant dont le $J_{Composant}.\dot{\omega}_{Composant}$ est de loin prépondérant dans cette somme est le rotor du moteur associé au solaire d'entrée de la réduction qu'il entraine à la même vitesse.

En ne prenant en compte que la décélération du rotor, l'application du principe fondamental de la dynamique à cette visseuse conduit à la relation suivante :

$$C_{Sortie} = C_{Capteur} + J_{Moteur}.\dot{\omega}_{Moteur}$$

avec

$C_{Sortie}$ :     Couple de sortie du dispositif de vissage

$C_{Capteur}$ :     Couple mesuré par le capteur intégré au dispositif de vissage

$J_{Moteur}$     Inertie rotorique du rotor et du solaire qui lui est directement lié

$\omega_{Moteur}$ :     Décélération du rotor dans un repère galiléen

Les visseuses à élément déformant externe sont généralement fixées sur des structures immobiles bâtis ou machines spéciales. Leur carter constitue donc un repère galiléen et la prise en compte du terme $\dot{\omega}_{Moteur}$, décélération du rotor par rapport au stator lié au carter, satisfait l'application du principe fondamental de la dynamique.

Comme cela va être expliqué ultérieurement, ceci n'est plus vrai dans le cas où la visseuse n'est plus fixe mais mobile, son carter pouvant être soumis à des accélérations ne constituant de ce fait pas un repère galiléen.

Le terme $J_{Moteur}.\dot{\omega}_{Moteur}$ n'étant pas nul lors des variations de vitesse du moteur, il n'y a pas une stricte égalité théorique entre le couple mesuré par le capteur de couple intégré à la visseuse et le couple de sortie réellement appliqué à la vis.

Une solution pour minimiser l'imprécision résultant de la décélération du rotor sur la mesure du couple de serrage, tout en limitant l'overshoot de serrage, consiste donc à réduire la vitesse de rotation du moteur lors de la montée en couple du cycle de vissage. Se faisant, le terme $\dot{\omega}_{Moteur}$ devient négligeable et le couple $C_{Sortie}$ appliqué sur la vis devient égal au couple $C_{Capteur}$ mesuré par le capteur :

$$C_{Sortie} = C_{Capteur}$$

Cependant, une telle réduction de la vitesse de rotation conduit à un allongement de la durée du cycle de vissage, et en conséquence à une baisse de productivité.

En outre, quand bien même la vitesse de rotation du moteur est réduite pendant la montée en couple, la vitesse du moteur n'est pas toujours parfaitement stable du fait d'éventuelles vibrations de vissage dans l'assemblage (« stick-slip » en langue anglaise).

Cette vitesse n'étant pas parfaitement stable, elle induit une variation aléatoire de la composante $J_{Moteur} \cdot \dot{\omega}_{Moteur}$ et donc une différence aléatoire entre couple mesuré par le capteur intégré à la visseuse et le couple de serrage réellement appliqué sur la vis, ce qui dégrade bien entendu la précision de la mesure du couple de sortie.

La solution consistant à réduire la vitesse du moteur pendant le vissage pour améliorer la précision de la mesure du couple de serrage n'est donc pas sans défaut.

De plus les inventeurs avaient à l'esprit les inconvénients propres aux dispositifs de vissage à couronne flottante impliquant leur contrôle périodique suivi d'une éventuelle re-calibration, inconvénients déjà décrits plus haut.

Les inventeurs ont alors eu l'idée d'intégrer au dispositif de vissage des moyens et procédés de mesure de l'accélération (ou décélération) du rotor, outre les moyens de mesure du couple traditionnellement intégrés à la visseuse, pour tenir compte de cette accélération (ou décélération) dans la mesure du couple de sortie et la corriger de sorte qu'elle soit plus proche du couple de sortie réellement appliqué à la vis.

Que ce soit dans le cadre de l'utilisation d'une visseuse coaxial ou non-coaxiale à élément déformant externe ou à couronne flottante, la mise en oeuvre de l'invention permet d'améliorer la précision de la mesure du couple de sortie délivré par le dispositif de vissage.

Selon une variante possible, un dispositif selon l'invention comprend un carter fixe dans l'espace, lesdits moyens de mesure de l'accélération ou décélération dudit rotor, dans un repère galiléen propre audit carter, comprenant :

- des moyens de détermination de l'angle de rotation dudit rotor par rapport audit stator dans ledit repère galiléen propre audit carter, et
- des moyens de détermination de la dérivée seconde dudit angle de rotation par rapport au temps, ladite dérivée seconde dudit angle de rotation étant représentative de l'accélération ou décélération dudit rotor dans ledit repère galiléen propre audit carter.

Ceci est une manière simple de déterminer l'accélération du rotor à partir de sa position angulaire lorsque son carter est fixe.

Selon une variante possible, un dispositif selon l'invention comprend un carter mobile dans l'espace, lesdits moyens de mesure de l'accélération ou décélération dudit rotor, dans un repère galiléen externe audit dispositif de vissage, comprenant :

- des moyens de mesure de l'angle de rotation dudit rotor par rapport audit stator dans un repère lié audit carter ;
- des moyens de mesure de l'angle de rotation dudit carter autour de l'axe dudit rotor dans ledit repère galiléen externe audit dispositif de vissage ;
- des moyens de calcul de la dérivée seconde par rapport au temps de la somme dudit angle de rotation dudit rotor par rapport audit stator dans ledit repère lié audit carter et dudit angle de rotation dudit carter autour de l'axe dudit rotor dans ledit repère galiléen externe audit dispositif de vissage,
  ou
  des moyens de calcul de la dérivée seconde par rapport au temps dudit angle de rotation dudit rotor par rapport audit stator dans ledit repère lié audit carter, des moyens de détermination de la dérivée seconde par rapport au temps dudit angle de rotation dudit carter autour de l'axe dudit rotor dans ledit repère galiléen externe audit dispositif de vissage, et des moyens de calcul de la somme de ces deux dérivées secondes,

ladite dérivée seconde de ladite somme et la somme desdites dérivées secondes étant toutes les deux égales à l'accélération ou décélération dudit rotor dans ledit repère galiléen externe au dispositif de vissage.

Ceci est une manière simple de déterminer l'accélération du rotor à partir de sa position angulaire lorsque son carter est mobile.

Selon une variante possible, un dispositif selon l'invention comprend un carter fixe dans l'espace, lesdits moyens de mesure de l'accélération ou décélération dudit rotor, dans un repère galiléen propre audit carter, comprenant :

- des moyens de mesure de la fréquence de rotation dudit rotor par rapport audit stator dans ledit repère galiléen propre audit carter, et
- des moyens de détermination de la dérivée première de ladite fréquence de rotation par rapport au temps, ladite dérivée première de ladite fréquence de rotation étant égale à l'accélération ou décélération dudit rotor dans ledit repère galiléen propre audit carter.

Ceci est une manière simple de déterminer l'accélération du rotor à partir de sa fréquence de rotation lorsque son carter est fixe.

Selon une variante possible, un dispositif selon l'invention comprend un carter mobile dans l'espace, lesdits moyens de mesure de l'accélération ou décélération dudit rotor, dans un repère galiléen externe audit dispositif de vissage, comprenant :

- des moyens de mesure de la fréquence de rotation dudit rotor par rapport audit stator dans un repère lié audit carter ;
- des moyens de mesure de la fréquence de rotation dudit carter autour de l'axe de rotation dudit rotor dans ledit repère galiléen externe audit dispositif de vissage ;
- des moyens de détermination de la dérivée première par rapport au temps de la somme desdites fréquences de rotation du rotor et du carter,
  ou
  des moyens de détermination de la dérivée première par rapport au temps de ladite fréquence de rotation dudit rotor, des moyens de détermination de la dérivée première par rapport au temps de ladite fréquence de rotation dudit carter, et des moyens de détermination de la somme de la sommes desdites dérivées première par rapport au temps des fréquences de rotation dudit rotor et dudit carter,

ladite dérivée première de la somme desdits fréquences de rotation ou la somme desdites dérivées premières étant égale à l'accélération ou décélération dudit rotor dans ledit repère galiléen externe audit dispositif de vissage.

Ceci est une manière simple de déterminer l'accélération du rotor à partir de sa fréquence de rotation lorsque son carter est mobile.

Selon une variante possible, ladite transmission comprend au moins un train épicycloïdal muni d'une couronne, ledit élément déformant dudit capteur de couple étant lié en rotation à ladite couronne.

Ceci correspond tant aux visseuses à élément déformant externe qu'aux visseuses à couronne flottante.

Selon une variante possible, ladite couronne est montée flottante à l'intérieur dudit carter et arrêtée en rotation par rapport audit carter par l'intermédiaire dudit élément déformant dudit capteur de couple, ledit élément déformant étant lié en rotation audit carter.

Dans ce cas, un dispositif selon l'invention comprend préférentiellement des moyens de mesure de la valeur de l'intensité électrique Iq consommée par ledit moteur, lesdits moyens de calcul dudit couple de sortie C$_{sortie}$ déterminant ledit couple de sortie à partir du couple C$_{capteur}$ mesuré par ledit capteur de couple, de l'accélération ou décélération dudit rotor mesurée par lesdits moyens de mesure de l'accélération ou décélération dudit rotor et de l'intensité électrique Iq mesurée par lesdits moyens de mesure de la valeur de l'intensité électrique consommée par ledit moteur.

Dans le cas d'une visseuse à couronne flottante, le couple de sortie dépend du couple électromagnétique du moteur lequel dépend de Iq. Sa prise en compte permet d'améliorer la précision de la détermination du couple de sortie.

Dans ce cas de visseuse à couronne flottante à carter fixe ou mobile, lesdits moyens de calcul dudit couple de sortie $C_{Sortie}$ déterminent préférentiellement le couple de sortie selon la formule suivante :

$$C_{Sortie} = C_{Capteur} + Kt \cdot Iq + J_{Moteur} \cdot \dot{\omega}_{Moteur}$$

Kt étant la constante de couple électromagnétique du moteur

Iq étant la composante de l'intensité du courant consommé par le moteur qui génère du couple électromagnétique

J$_{moteur}$ étant l'inertie rotorique dudit rotor

$\omega_{Moteur}$ étant l'accélération dudit rotor dans ledit repère galiléen propre audit carter ou extérieur audit dispositif.

Selon une variante possible, ledit dispositif comprend une platine de fixation dudit dispositif sur un bâti extérieur, ladite couronne étant liée en rotation audit carter d'une part et liée à la platine de fixation d'autre part par l'intermédiaire dudit élément déformant.

Ceci correspond à une visseuse à élément déformant externe.

Une telle platine de fixation permet supporter le couple de réaction généré par l'action de serrage, c'est-à-dire le couple qui tend à entrainer en rotation le dispositif de vissage autour de l'axe de vissage et dans le sens opposé au sens de vissage.

Selon cette variante de visseuse à élément déformant externe, et lorsque le dispositif comprend un carter fixe dans l'espace, lesdits moyens de calcul dudit couple de sortie $C_{Sortie}$ déterminent préférentiellement le couple de sortie selon la formule suivante :

$$C_{Sortie} = C_{Capteur} + J_{Moteur} \cdot \dot{\omega}_{Moteur}$$

J$_{moteur}$ étant l'inertie rotorique dudit rotor

$\omega_{Moteur}$ étant l'accélération dudit rotor dans ledit repère galiléen propre audit carter.

Selon cette variante de visseuse à élément déformant externe, lorsque le dispositif comprend un carter mobile dans l'espace, ledit dispositif comprend préférentiellement des moyens de détermination de l'accélération dudit carter en rotation autour de l'axe dudit capteur dans ledit repère galiléen externe au dispositif de vissage.

La visseuse peut en effet se déplacer autour de l'axe du capteur ce qui a un impact sur la détermination du couple de sortie. Cette prise en considération permet donc d'améliorer la précision de la détermination du couple de sortie.

Dans ce cas, lesdits moyens de détermination de l'accélération dudit carter en rotation autour de l'axe dudit capteur dans ledit repère galiléen externe au dispositif de vissage comprennent préférentiellement :

- des moyens de détermination de l'angle de rotation dudit carter autour de l'axe dudit capteur dans ledit repère galiléen externe au dispositif de vissage, et
- des moyens de détermination de la dérivée seconde par rapport au temps dudit angle de rotation dudit carter autour de l'axe dudit capteur dans ledit repère galiléen externe au dispositif de vissage, ladite dérivée seconde dudit angle de rotation dudit carter autour de l'axe dudit capteur dans ledit repère galiléen externe au dispositif de vissage étant égale à l'accélération ou décélération dudit carter dans ledit repère galiléen externe au dispositif de vissage.

On détermine alors simplement l'accélération du carter autour de l'axe du capteur à partir de sa position angulaire.

Alternativement, lesdits moyens de détermination de l'accélération dudit carter en rotation autour de l'axe dudit capteur dans ledit repère galiléen externe au dispositif de vissage peuvent comprendre :

- des moyens de mesure de la fréquence de rotation dudit carter autour de l'axe dudit capteur dans ledit repère galiléen externe au dispositif de vissage, et
- des moyens de détermination de la dérivée première par rapport au temps de ladite fréquence de rotation dudit carter autour de l'axe dudit capteur dans ledit repère galiléen externe au dispositif de vissage, ladite dérivée première de ladite fréquence de rotation dudit carter autour de l'axe dudit capteur dans ledit repère galiléen externe au dispositif de vissage étant égale à l'accélération ou décélération dudit carter dans ledit repère galiléen externe au dispositif de vissage.

On détermine alors simplement l'accélération du carter autour de l'axe du capteur à partir de sa fréquence de rotation.

Dans le cas d'une visseuse à élément déformant externe et à carter mobile, lesdits moyens de calcul dudit couple de sortie $C_{Sortie}$ déterminent préférentiellement le couple de sortie selon la formule suivante :

$$C_{Sortie} = C_{Capteur} + J_{Carter/capteur} \cdot \dot{\omega}_{CarterCapteur/ext} + J_{Moteur} \cdot \dot{\omega}_{Moteur/ext}$$

$J_{Carter/capteur}$ étant l'inertie rotorique du carter par rapport à l'axe du capteur

$\omega_{CarterCapteur/ext}$ étant l'accélération en rotation du carter suivant l'axe du capteur dans ledit repère galiléen externe au dispositif de vissage

$J_{Moteur}$ étant l'inertie rotorique dudit rotor

$\omega_{Moteur/ext}$ étant l'accélération du rotor en rotation suivant son axe dans ledit repère galiléen externe au dispositif de vissage.

La présente invention concerne également un procédé selon la revendication 16.

Selon une variante possible dans laquelle lequel ledit carter est fixe dans l'espace, ladite étape de mesure de l'accélération ou décélération dudit rotor peut comprendre :

- une étape de détermination de l'angle de rotation dudit rotor par rapport audit stator dans un repère galiléen propre audit carter, et
- une étape de détermination de la dérivée seconde dudit angle de rotation par rapport au temps, ladite dérivée seconde dudit angle de rotation étant égale à l'accélération ou décélération dudit rotor dans ledit repère galiléen propre audit carter.

Selon une variante possible dans laquelle ledit carter est mobile dans l'espace, ladite étape de mesure de l'accélération ou décélération dudit rotor peut comprendre :

- une étape de mesure de l'angle de rotation dudit rotor par rapport audit stator dans un repère lié audit carter ;
- une étape de mesure de l'angle de rotation dudit carter autour de l'axe dudit rotor dans un repère galiléen externe au dispositif de vissage,
- une étape de calcul de la dérivé seconde par rapport au temps de la somme dudit angle de rotation dudit rotor par rapport audit stator dans ledit repère lié audit carter et dudit angle de rotation dudit carter autour de l'axe dudit rotor dans ledit repère galiléen externe au dispositif de vissage,

  ou

  une étape de calcul de la dérivée seconde par rapport au temps dudit angle de rotation dudit rotor par rapport audit stator dans ledit repère lié audit carter, une étape de calcul de la dérivée seconde par rapport au temps dudit angle de rotation dudit carter autour de l'axe dudit rotor dans ledit repère galiléen externe au dispositif de vissage, et une étape de calcul de la somme de ces deux dérivées secondes,

la dérivée seconde de ladite somme et la somme desdites dérivées secondes étant toutes les deux égales à la décélération ou à l'accélération dudit rotor dans ledit repère galiléen externe au dispositif de vissage.

Selon une variante possible dans laquelle lequel ledit carter est fixe dans l'espace, ladite étape de mesure de l'accélération ou décélération dudit rotor peut comprendre :

- une étape de mesure de la fréquence de rotation dudit rotor par rapport audit stator dans un repère galiléen propre au carter, et
- une étape de détermination de la dérivée première par rapport au temps de ladite fréquence de rotation, ladite dérivée première de ladite fréquence de rotation étant égale à l'accélération ou décélération dudit rotor dans ledit repère galiléen propre au carter.

Selon une variante possible dans laquelle dans lequel ledit carter est mobile dans l'espace, ladite étape de mesure de l'accélération ou décélération dudit rotor peut comprendre :

- une étape de mesure de la fréquence de rotation dudit rotor par rapport audit stator dans un repère lié au carter,
- une étape de mesure de la fréquence de rotation du carter autour de l'axe dudit rotor dans un repère galiléen externe au dispositif de vissage ;
- une étape de calcul de la dérivée première par rapport au temps de la somme de la fréquence de rotation dudit rotor par rapport audit stator dans ledit repère lié au carter et de la fréquence de rotation du carter autour de l'axe dudit rotor dans ledit repère galiléen externe au dispositif de vissage,

  ou

  une étape de calcul de la dérivée première par rapport au temps de la fréquence de rotation dudit rotor par rapport audit stator dans ledit repère lié au carter, une étape de calcul de la dérivée première par rapport au temps de la fréquence de rotation du carter autour de l'axe dudit rotor dans ledit repère galiléen externe au dispositif de vissage, et une étape de calcul de la sommes des ces deux dérivées premières,

la dérivée première de la somme et la sommes des dérivées premières étant toutes les deux égales à l'accélération ou décélération dudit rotor dans ledit repère galiléen externe au dispositif de vissage.

Selon une variante possible dans laquelle ladite transmission comprend au moins un train épicycloïdal muni d'une couronne, ledit élément déformant dudit capteur de couple étant lié en rotation à ladite couronne, ladite couronne étant montée flottante à l'intérieur dudit carter et arrêtée en rotation par rapport audit carter par l'intermédiaire dudit élément déformant dudit capteur de couple, ledit élément déformant étant lié en rotation audit carter, ledit procédé comprenant une étape de mesure de la valeur de l'intensité électrique Iq consommée par ledit moteur et une étape de calcul dudit couple de sortie à partir du couple $C_{capteur}$ mesuré par ledit capteur de couple, de l'accélération ou décélération dudit rotor et de l'intensité électrique Iq.

Dans ce cas, ladite étape de calcul dudit couple de sortie $C_{Sortie}$ applique préférentiellement la formule suivante que le carter soit fixe ou mobile :

$$C_{Sortie} = C_{Cappeur} + Kt \cdot Iq + J_{Moteur} \cdot \dot{\omega}_{Moteur}$$

Kt étant la constante de couple électromagnétique du moteur

Iq étant la composante de l'intensité du courant consommé par le moteur qui génère du couple électromagnétique

$J_{moteur}$ étant l'inertie rotorique dudit rotor

$\dot{\omega}_{Moteur}$ étant l'accélération dudit rotor dans ledit repère galiléen propre audit carter ou externe audit dispositif de vissage.

Selon une variante possible dans laquelle ladite transmission comprend au moins un train épicycloïdal muni d'une couronne, ledit élément déformant dudit capteur de couple étant lié en rotation à ladite couronne, ledit dispositif comprenant une platine de fixation dudit dispositif sur un bâti extérieur, ladite couronne étant liée en rotation audit carter d'une part et liée à la platine de fixation d'autre part par l'intermédiaire dudit élément déformant, ce qui correspond à une visseuse à élément déformant externe, et lorsque le carter est fixe, ladite étape de calcul dudit couple de sortie $C_{Sortie}$ applique préférentiellement la formule suivante :

$$C_{Sortie} = C_{Capteur} + J_{Moteur} \cdot \dot{\omega}_{Moteur}$$

$J_{moteur}$ étant l'inertie rotorique dudit rotor
$\dot{\omega}_{Moteur}$ étant l'accélération dudit rotor dans ledit repère galiléen propre audit carter.

Selon une variante correspondant à une visseuse à élément déformant externe et à carter mobile, le procédé peut comprendre une étape de détermination de l'accélération dudit carter en rotation autour de l'axe dudit capteur dans ledit repère galiléen externe au dispositif de vissage, et une étape de calcul dudit couple de sortie à partir du couple $C_{capteur}$, de l'accélération ou décélération dudit rotor dans ledit repère galiléen externe au dispositif de vissage et de l'accélération dudit carter en rotation autour de l'axe dudit capteur dans ledit repère galiléen externe au dispositif de vissage.

Dans ce cas, ladite étape de détermination de l'accélération dudit carter en rotation autour de l'axe dudit capteur dans ledit repère galiléen externe au dispositif de vissage peut comprendre :

- une étape de détermination de l'angle de rotation dudit carter autour de l'axe dudit capteur dans ledit repère galiléen externe au dispositif de vissage, et
- une étape de détermination de la dérivée seconde par rapport au temps dudit angle de rotation dudit carter autour de l'axe dudit capteur dans ledit repère galiléen externe au dispositif de vissage, ladite dérivée seconde dudit angle de rotation dudit carter autour de l'axe dudit capteur dans ledit repère galiléen externe au dispositif de vissage étant égale à l'accélération ou décélération dudit carter dans ledit repère galiléen externe au dispositif de vissage.

Alternativement, ladite étape de détermination de l'accélération dudit carter en rotation autour de l'axe dudit capteur dans ledit repère galiléen peut comprendre :

- une étape de mesure de la fréquence de rotation du carter autour de l'axe du capteur dans le repère galiléen externe au dispositif de vissage ;
- une étape de calcul de la dérivée première par rapport au temps de cette fréquence de rotation, ladite dérivée première de ladite fréquence de rotation étant égale à l'accélération ou décélération dudit carter en rotation autour de l'axe du capteur dans le repère galiléen externe au dispositif de vissage.

Selon une variante possible dans laquelle ladite transmission comprenant au moins un train épicycloïdal muni d'une couronne, ledit élément déformant dudit capteur de couple étant lié en rotation à ladite couronne, ledit dispositif comprenant une platine de fixation dudit dispositif sur un bâti extérieur, ladite couronne étant liée en rotation audit carter d'une part et liée à la platine de fixation d'autre part par l'intermédiaire dudit élément déformant, ce qui correspond à une visseuse à élément déformant externe, et lorsque le carter est mobile, ladite étape de calcul dudit couple de sortie $C_{Sortie}$ applique préférentiellement la formule suivante :

$$C_{Sortie} = C_{Capteur} + J_{Carter/capteur} \cdot \dot{\omega}_{CarterCapteur/ext} + J_{Moteur} \cdot \dot{\omega}_{Moteur/ext}$$

$J_{Carter/capteur}$ étant l'inertie rotorique du carter par rapport à l'axe du capteur
$\dot{\omega}_{CarterCapteur/ext}$ étant l'accélération en rotation du carter suivant l'axe du capteur dans ledit repère galiléen externe au dispositif de vissage
$J_{Moteur}$ étant l'inertie rotorique dudit rotor
$\dot{\omega}_{Moteur/ext}$ étant l'accélération du rotor en rotation suivant son axe dans ledit repère galiléen externe au dispositif de vissage.

L'invention concerne encore un programme d'ordinateur comportant des instructions de code de programme pour l'exécution des étapes du procédé de détermination du couple de sortie $C_{sortie}$ délivré par l'arbre de sortie d'un dispositif de vissage selon l'une quelconque des revendications 16 à 27, lorsque ledit programme est exécuté par un processeur.

Un tel programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention concerne encore un support d'enregistrement lisible par un ordinateur sur lequel est enregistré un programme d'ordinateur comportant des instructions de code de programme pour l'exécution des étapes du procédé de détermination du couple de sortie $C_{sortie}$ délivré par l'arbre de sortie d'un dispositif de vissage selon l'une quelconque des revendications 16 à 27, lorsque ledit programme est exécuté par un processeur.

Un tel support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargé sur un réseau par exemple le réseau Internet.

Alternativement, le support d'enregistrement peut être un circuit intégré dans lequel le programme est incorporé, le circuit étant adapté pour exécuter ou pour être utilisé dans l'exécution du procédé de détermination du couple de sortie précité.

## 5. Liste des figures

D'autres caractéristiques et avantages de l'invention apparaîtront à la lecture de la description suivante de modes de réalisation particuliers, donnée à titre de simple exemple illustratif et non limitatif, et des dessins annexés parmi lesquels :

- les figures 1 et 2 illustrent une visseuse coaxiale à élément déformant externe selon l'art antérieur;
- les figures 3 et 4 illustrent une visseuse non coaxiale à élément déformant externe selon l'art antérieur;
- les figures 5 et 6 illustrent des courbes d'enregistrement du couple de sortie mesuré par un capteur intégré à la visseuse et par un capteur étalon respectivement au moyen d'une visseuse coaxiale et non coaxiale à élément déformant externe ;
- les figures 5 bis et 6 bis illustrent respectivement des agrandissements de la zone du temps T2 des figures 5 et 6 ;
- les figures 7 et 8 illustrent une visseuse à couronne flottante selon l'art antérieur ;

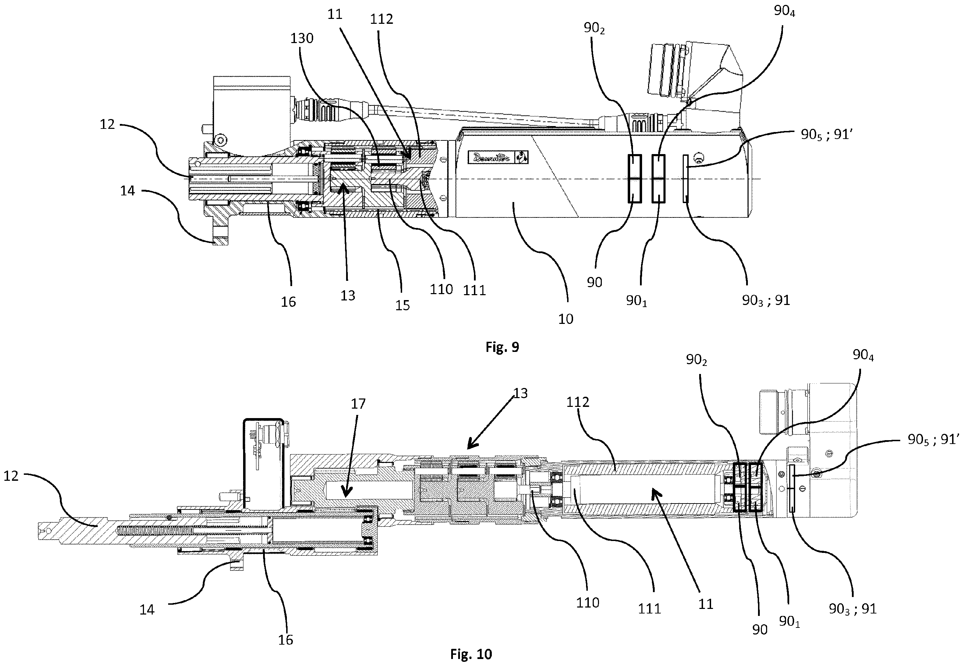

- les figures 9, 10 et 11 illustrent respectivement une visseuse coaxiale à élément déformant externe, une visseuse non coaxiale à élément déformant externe et une visseuse à couronne flottante selon l'invention ;

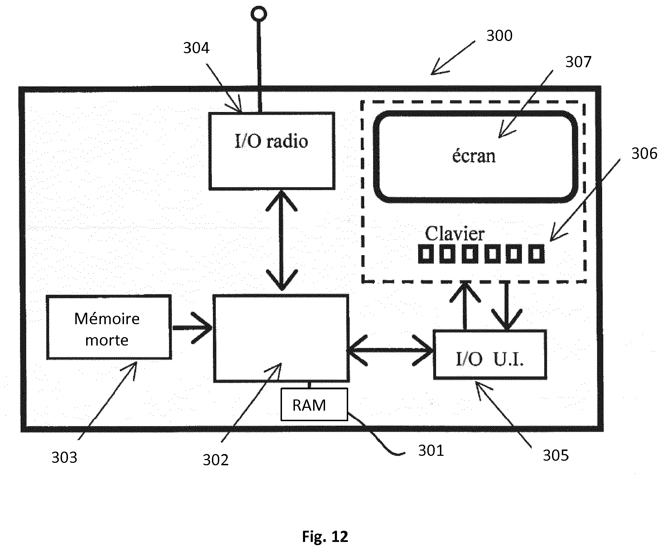

- la figure 12 illustre un exemple e contrôleur d'un dispositif de vissage selon l'invention ;

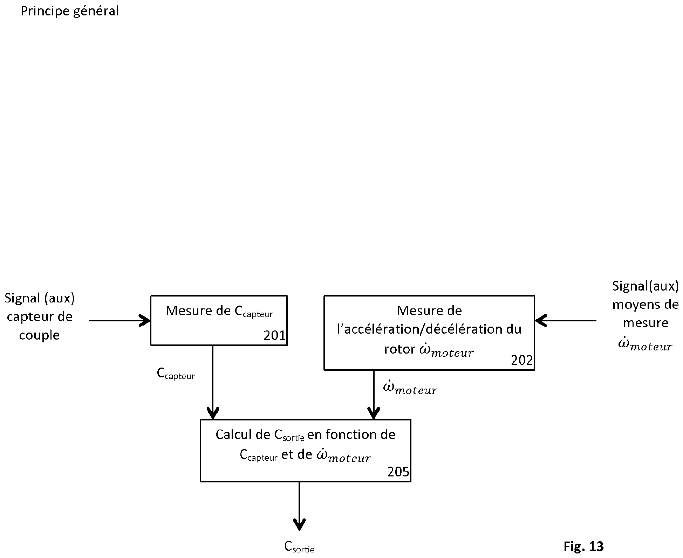

- les figures 13 à 21 illustrent des logigrammes de variantes d'un procédé selon l'invention.

## 6. Description de modes de réalisation particuliers

### 6.1. Dispositif

Un dispositif de vissage selon l'invention peut-être une visseuse à élément déformant externe ou une visseuse à couronne flottante.

### 6.1.1. Visseuse coaxiale ou non coaxiale à élément déformant externe

Une visseuse coaxiale à élément déformant externe comprend classiquement, comme cela est représenté à la figure 9, un carter 10 logeant un moteur 11. Le moteur 11 comprend un rotor 111 avec un arbre moteur 110 et un stator 112.

La visseuse comprend un arbre de sortie 12 susceptible d'entrainer en rotation une douille de vissage (non représentée). Cet arbre de sortie est coaxial avec l'arbre du moteur.

Le carter 10 loge une transmission 13 comprenant un ou plusieurs trains épicycloïdaux. Cette transmission 13 comprend une entrée constituée par un pignon solaire 130 relié à l'arbre moteur 110, et une sortie constituée par un porte satellites d'un train épicycloïdal et relié à l'arbre de sortie 12 de la broche.

La transmission 13 à train épicycloïdal comprend une couronne 15 qui, dans le cas de la mise en oeuvre de plusieurs trains épicycloïdaux, est commune à ceux-ci.

Cette couronne 15 est solidaire en rotation de la portion du carter 10 logeant le groupe motoréducteur comprenant le moteur et la transmission.

Le carter 10 comprend une platine de fixation 14 permettant la solidarisation de la visseuse à un support fixe ou mobile.

La visseuse comprend des moyens de détermination du couple de sortie $C_{sortie}$ délivré par la visseuse.

Ces moyens de détermination du couple de sortie $C_{sortie}$ comprennent un capteur de couple à élément déformant 16 intégré à la visseuse. L'élément déformant 16 du capteur de couple est placé entre la platine de fixation 14 et la portion de carter 10 logeant le motoréducteur, l'arbre de sortie 12 passant au travers de cet élément déformant ayant par exemple la forme d'un cylindre creux. L'élément déformant 16 est fixe par rapport à la platine 14 et au carter 10. Il est lié en rotation à la couronne 15.

La couronne 15 est donc liée en rotation au carter 10 d'une part et liée à la platine de fixation 14 d'autre part par l'intermédiaire de l'élément déformant 16.

L'élément déformant 16 porte un pont de jauges de contrainte qui délivre un signal proportionnel au couple généré lors d'un vissage dans l'élément déformant. Ce couple est appelé $C_{capteur}$. Il permet de mesurer un couple de réaction du au vissage.

L'élément déformant est intégré à la visseuse, c'est-à-dire qu'il supporte des efforts dans la chaine de transmission générés par la montée en couple du serrage, ces efforts étant proportionnels au couple de serrage délivré par le dispositif de vissage.

Les moyens de détermination du couple de sortie $C_{sortie}$ comprennent des moyens de mesure de l'accélération ou décélération du rotor 111 du moteur 11 dans un repère galiléen.

**Carter fixe**

Dans le cas où le carter est fixe, c'est-à-dire qu'il est solidarisé à un support fixe, le repère galiléen est propre au carter.

Ces moyens de mesure de l'accélération ou décélération du rotor comprennent des moyens de détermination de l'angle de rotation du rotor par rapport au stator dans le repère galiléen propre au carter. Ces moyens de détermination comprennent un capteur d'angle 90 qui peut par exemple comprendre un résolveur.

Les moyens de mesure de l'accélération ou décélération du rotor comprennent également des moyens de calcul en temps réel de la dérivée seconde par rapport au temps de la valeur de l'angle de rotation du rotor par rapport au stator mesuré par le capteur d'angle 90. La valeur de la dérivée seconde de cet angle de rotation est égale à l'accélération ou décélération du rotor dans le repère galiléen propre au carter.

Dans une variante, les moyens de mesure de l'accélération ou de la décélération du rotor pourront comprendre, plutôt qu'un capteur d'angle mesurant l'angle de rotation du rotor par rapport au stator et des moyens de calcul de la dérivée seconde ce celui-ci, un capteur $90_1$ de mesure de la fréquence de rotation du rotor dans le repère galiléen propre au carter et des moyens de détermination de la dérivée première par rapport au temps de cette fréquence de rotation, cette dérivée première étant égale à l'accélération ou décélération du rotor dans le repère galiléen propre au carter. Ce capteur de fréquence de rotation pourra par exemple être une génératrice entrainée en rotation par le moteur et délivrant un courant dont l'intensité est proportionnelle à sa fréquence de rotation.

Les moyens de détermination du couple de sortie comprennent des moyens de calcul du couple de sortie $C_{sortie}$ à partir, i.e. en fonction, du couple $C_{capteur}$ mesuré par le capteur de couple et de l'accélération ou décélération mesurée par les moyens de mesure de l'accélération ou décélération du rotor.

Dans ce mode de réalisation, les moyens de calcul du couple de sortie $C_{sortie}$ déterminent le couple de sortie selon la formule suivante :

$$C_{Sortie} = C_{Capteur} + J_{Moteur} \cdot \dot{\omega}_{Moteur}$$

$J_{moteur}$ étant l'inertie rotorique dudit rotor
$\dot{\omega}_{Moteur}$ étant l'accélération du rotor dans le repère galiléen propre au carter.

**Carter mobile**

Dans le cas où le carter de la visseuse est mobile dans l'espace, il peut tourner notamment autour de l'axe de rotation du rotor au cours d'un cycle de vissage. L'espace extérieur à la visseuse constitue le repère galiléen à l'intérieur duquel se déplace la visseuse.

Pour corriger ce problème propre aux visseuses mobiles, les moyens de détermination de la décélération ou accélération du rotor comprennent :

- des moyens de mesure $90_2$ de l'angle de rotation du rotor par rapport au stator dans un repère lié au carter : ces moyens sont de type identique à ceux décrits en relation avec les visseuses à carter fixe ;

- des moyens de mesure $90_3$ de l'angle de rotation du carter autour de l'axe de rotation du rotor dans le repère galiléen externe à la visseuse : il peut par exemple s'agir d'un gyroscope ;
- des moyens de calcul de la somme de l'angle de rotation du rotor par rapport au stator et de l'angle de rotation du carter autour de l'axe du rotor ;
- des moyens de calcul de la dérivée seconde par rapport au temps de la somme de l'angle de rotation du rotor par rapport au stator et de l'angle de rotation du carter autour de l'axe du rotor, cette dérivée seconde étant égale à l'accélération ou décélération du rotor dans le repère galiléen externe à la visseuse.

Dans une variante, plutôt que de comprendre des moyens de calcul de la somme de l'angle de rotation du rotor par rapport au stator et de l'angle de rotation du carter autour de l'axe du rotor, et des moyens de calcul de la dérivée seconde de cette somme, le dispositif pourra comprendre des moyens de calcul de la dérivée seconde par rapport au temps de l'angle de rotation du rotor par rapport au stator, des moyens de calcul de la dérivée seconde par rapport au temps de l'angle de rotation du carter autour de l'axe du rotor, et des moyens de calcul de la somme de ces deux dérivées secondes, la somme de ces dérivées secondes étant égale à l'accélération ou décélération du rotor dans le repère galiléen externe à la visseuse.

Dans le cas où le carter est mobile, les moyens de détermination du couple de sortie comprennent en outre des moyens de calcul de l'accélération ou décélération du carter en rotation autour de l'axe du capteur dans le repère galiléen externe à la visseuse. Ces moyens de calcul comprennent :

- des moyens de mesure 91 de l'angle de rotation du carter autour de l'axe du capteur dans le repère galiléen externe à la visseuse. L'axe du capteur étant parallèle à celui du rotor dans ce mode de réalisation, ces moyens sont identiques aux moyens de mesure de l'angle de rotation du carter autour de l'axe de rotation du rotor dans le repère galiléen externe à la visseuse ;
- des moyens de calcul de la dérivée seconde par rapport au temps de cet angle, cette dérivée seconde étant égale à l'accélération ou décélération du carter en rotation autour de l'axe du capteur dans le repère galiléen externe à la visseuse. Dans ce mode de réalisation, ils sont identiques aux moyens de calcul de la dérivée seconde par rapport au temps de l'angle de rotation du carter autour de l'axe du rotor lorsque ceux-ci sont mis en oeuvre.

Dans une variante, et comme dans le cas d'une visseuse à carter fixe, les moyens de mesure de l'accélération ou de la décélération du rotor dans un repère galiléen externe à la visseuse pourront comprendre des capteurs de fréquence de rotation plutôt que des capteurs d'angle.
Dans ce cas, les moyens de détermination de la décélération ou accélération du rotor comprennent :

- des moyens de mesure $90_4$ de la fréquence de rotation dudit rotor par rapport audit stator dans un repère lié au carter (il pourra par exemple s'agir d'une génératrice entrainée en rotation par le moteur et délivrant un courant dont l'intensité est proportionnelle à sa fréquence de rotation),
- des moyens de mesure $90_5$ de la fréquence de rotation du carter autour de l'axe du rotor dans le repère galiléen externe à la visseuse (il pourra par exemple s'agir d'un gyroscope),
- des moyens de calcul de la somme de la fréquence de rotation du rotor et de la fréquence de rotation du carter,
- des moyens de calcul de la dérivée première par rapport au temps de ladite somme, ladite dérivée première de ladite somme étant égale à l'accélération ou décélération dudit rotor dans le repère galiléen externe à la visseuse.

Dans une variante, plutôt que de comprendre des moyens de calcul de la somme de la fréquence de rotation du rotor et de la fréquence de rotation du carter, et des moyens de calcul de la dérivée première par rapport au temps de ladite somme, le dispositif pourra comprendre des moyens de calcul de la dérivée première par rapport au temps de la fréquence de rotation dudit rotor par rapport audit stator dans un repère lié au carter, des moyens de calcul de la dérivée première par rapport au temps de la fréquence de rotation du carter autour de l'axe du rotor dans le repère galiléen externe à la visseuse, et des moyens de calcul de la somme de ces deux dérivées premières, la somme de ces dérivées premières étant égale à l'accélération ou décélération du rotor dans le repère galiléen externe à la visseuse.
Dans le cas où le carter est mobile, les moyens de détermination du couple de sortie comprennent en outre des moyens de calcul de l'accélération ou décélération du carter en rotation autour de l'axe du capteur dans le repère galiléen externe à la visseuse. Ces moyens de calcul comprennent :

- des moyens de mesure 91' de la fréquence de rotation du carter autour de l'axe du capteur dans le repère galiléen externe à la visseuse. L'axe du capteur étant parallèle à celui du rotor, ces moyens sont identiques aux moyens de mesure de la fréquence de rotation du carter autour de l'axe du rotor dans le repère galiléen externe à la visseuse ;
- des moyens de calcul de la dérivée première par rapport au temps de cette fréquence de rotation, ladite dérivée première de ladite fréquence de rotation étant égale à l'accélération ou décélération dudit carter en rotation autour de l'axe du capteur dans le repère galiléen externe à la visseuse. Ils sont identiques aux moyens de calcul de la dérivée première par rapport au temps de la fréquence de rotation du carter autour de l'axe du rotor dans le repère galiléen externe à la visseuse.

Les moyens de détermination du couple de sortie comprennent des moyens de calcul du couple de sortie $C_{sortie}$ à partir, i.e. en fonction, du couple $C_{capteur}$ mesuré par le capteur de couple, de l'accélération ou décélération mesurée par les moyens de mesure de l'accélération ou décélération du rotor et de l'accélération ou décélération du carter autour de l'axe du capteur.

Dans ce mode de réalisation, en appliquant le principe fondamental de la dynamique au système formé par une visseuse à élément déformant externe d'axe parallèle à l'axe moteur et ses composants mécaniques, on obtient la relation suivante, relative à la somme des moments autour de l'axe du capteur :

$$C_{Sortie} = C_{Capteur} + J_{Carter/capteur} \cdot \dot{\omega}_{CarterCapteur/ext} + J_{Moteur} \cdot \dot{\omega}_{Moteur/ext}$$

$J_{Carter/capteur}$ étant l'inertie rotorique du carter par rapport à l'axe du capteur.

$\omega_{CarterCapteur/ext}$ étant l'accélération en rotation du carter suivant l'axe du capteur dans le repère galiléen externe à la visseuse.

$J_{Moteur}$ étant l'inertie rotorique dudit rotor.

$\omega_{Moteur/ext}$ étant l'accélération du rotor en rotation suivant son axe dans le repère galiléen externe à la visseuse.

La composante $J_{Carter/capteur} \cdot \dot{\omega}_{CarterCapteur/ext}$ résulte de la rotation du carter autour de l'axe du capteur de couple dans le repère galiléen externe à la visseuse lorsque la visseuse est amenée à se déplacer au cours d'un cycle de vissage, par exemple sous l'effet de vibrations, d'un choc d'un élément extérieur dans la visseuse ou autre...

Les moyens de mesure de la fréquence (ou l'angle) de rotation du carter autour de l'axe du capteur et de la fréquence (ou l'angle) de rotation du carter autour de l'axe du moteur peuvent être constitués par un même gyroscope.

Que son carter soit fixe ou mobile, la visseuse comprend un contrôleur 300 destiné à commander le dispositif de vissage. Selon l'exemple de réalisation illustré à la figure 12, le contrôleur 300 comprend une mémoire vive 301 (par exemple une mémoire RAM), une unité de traitement 302 équipée par exemple d'un processeur, et pilotée par un programme d'ordinateur, comprenant des instructions de code de programme pour l'exécution du procédé correspondant de détermination du couple de sortie du dispositif de vissage, ce programme étant stocké dans une mémoire morte 303 (par exemple une mémoire ROM ou un disque dur). Le contrôleur comprend également un module d'émission/réception 304 filaire ou sans fil lui permettant de communiquer avec le dispositif de vissage et éventuellement avec d'autres équipements tel qu'un réseau informatique, ce module d'émission/réception incluant :

- un récepteur pour recevoir des signaux délivrés par les différents moyens de mesure (capteur) intégrés à la visseuse ;
- un émetteur pour émettre des commandes vers la visseuse.

La visseuse comprend également un module d'émission/réception (non représenté) pour communiquer avec le contrôleur.

Le contrôleur comprend également une interface d'entrée-sortie 305, une interface utilisateur pour gérer un moyen d'introduction de commande 306 (clavier, écran tactile, souris, ...), un moyen d'affichage 307 (écran, afficheur, voyant lumineux) et éventuellement, un moyen d'émission d'un signal sonore sur une fréquence audible. Selon un autre mode de réalisation, non représenté, le contrôleur dispose d'un connecteur pour l'alimentation électrique du dispositif de vissage.

A l'initialisation, les instructions de code du programme d'ordinateur sont par exemple chargées dans la mémoire vive 301 avant d'être exécutées par le processeur de l'unité de traitement 302. La mémoire vive 303 contient notamment la formule adéquate de calcul du couple de sortie. Le processeur de l'unité de traitement 302 réalise les différents calculs nécessaires à la détermination du couple de sortie. Il peut ensuite par exemple afficher me résultat de la détermination du couple de sortie, l'enregistrer, le transmettre à un réseau, le comparer à une ou plusieurs valeurs de seuil prédéterminées et piloter le cas échéant le dispositif de vissage en conséquence, émettre une alarme visuel et/ou sonore en cas de dépassement du couple de serrage final souhaité...

La figure 12 illustre seulement une manière particulière, parmi plusieurs possibles, de réaliser un contrôleur, afin qu'il effectue les étapes du procédé de détermination du couple de sortie (dans l'un quelconque des différents modes de réalisation, ou dans une combinaison de ces modes de réalisation). En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où le contrôleur est réalisé avec une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

Le mode de réalisation qui vient d'être décrit concerne une visseuse coaxiale à élément déformant externe. Selon une variante illustrée à la figure 10, il peut s'agir d'une visseuse non coaxiale à élément déformant externe comprenant par exemple un train de deux engrenages parallèles 17 reliant la sortie de la transmission à trains épicycloïdaux 13 et l'arbre de sortie 12 de manière telle que l'arbre de sortie 12 et l'arbre du moteur 11 s'étendent selon deux axes parallèles et distants. Dans ce cas, les moyens de détermination du couple de sortie $C_{sortie}$ sont identiques à ceux mis en oeuvre dans le cadre d'une broche de vissage coaxiale.

Des moyens autres que le couple d'engrenage droits pourront être mis en oeuvre pour assurer un décalage d'axe entre l'axe de l'arbre moteur et celui de l'arbre de sortie. Il pourra par exemple s'agit de trois engrenages droits montés en cascade. Dans ce cas l'arbre de sortie du dispositif de vissage tournera dans le même sens que le moteur et les pics de perturbation de la mesure apparaitront dans le même sens que pour une broche coaxiale à élément déformant externe.

### 6.1.2. Visseuse coaxiale ou non coaxiale à couronne flottante

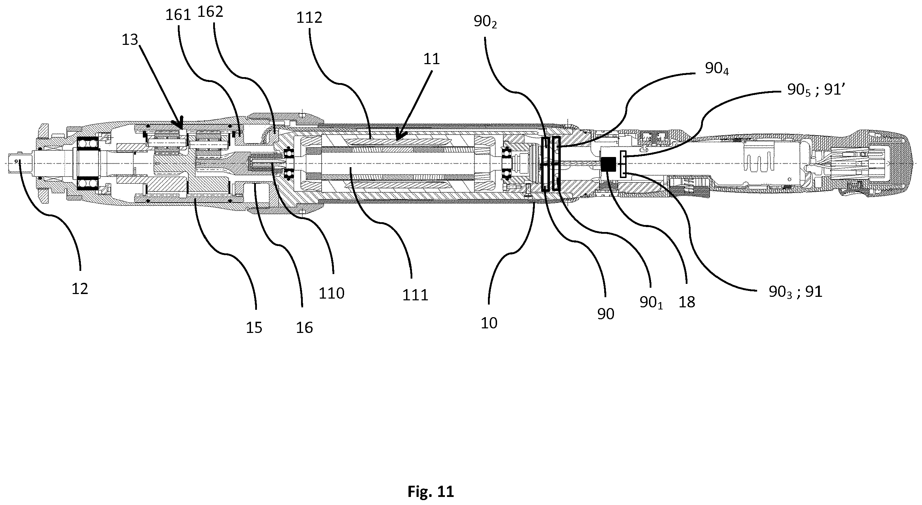

Une visseuse à couronne flottante comprend classiquement, ainsi que cela est représenté à la figure 11, un carter 10 logeant un moteur 11 comprenant un stator 112 et un rotor 111 muni d'un arbre moteur 110.

La visseuse comprend un arbre de sortie 12 susceptible d'entrainer en rotation une douille de vissage (non représentée).

Le carter 10 loge une transmission 13 comprenant au moins un train épicycloïdal reliant l'arbre du moteur 110 à l'arbre de sortie 12.

La visseuse comprend des moyens de détermination du couple de sortie $C_{sortie}$ délivré par la visseuse. Ces moyens de détermination du couple de sortie sont identiques à ceux décrits plus haut en relation avec les visseuses à élément déformant externe hormis en ce qui concernent les éléments suivants.

L'élément déformant 16 du capteur de couple est lié à une de ses extrémités 162 de manière fixe au carter 10. La couronne 15, contenant un ou des trains épicycloïdaux de la transmission, est solidaire en rotation de l'élément déformant 16 à l'autre extrémité 161 de l'élément déformant 16, ceci sans être reliée à sa périphérie au carter 10. La couronne 15 est donc montée flottante à l'intérieur du carter 10 et arrêtée en rotation par rapport au carter par l'intermédiaire de l'élément déformant du capteur de couple, l'élément déformant étant lié en rotation au carter. La couronne peut donc tourner légèrement à l'intérieur du carter selon son axe sous l'effet de la déformation de l'élément déformant.

La visseuse comprend des moyens de mesure 18 de la valeur de l'intensité électrique Iq consommée par le moteur 11, comme par exemple un ampèremètre. Il s'agit plus précisément de moyens de mesure de la composante de l'intensité consommée par le courant qui génère le couple électromagnétique. De façon connue en soit, l'homme du métier sait isoler du courant électrique consommé par un moteur la composante de celui-ci qui génère le couple électromagnétique délivré par le moteur. La position du moyen de mesure 18 sur la figure 11 est purement illustrative. En pratique, et de manière connue en soit de l'homme du métier, un tel moyen de mesure de courant est généralement placé dans le contrôleur pour les visseuses à câble d'alimentation électrique, (et dans la visseuse pour les visseuses à batterie).

Dans une visseuse à couronne flottante :

$$C_{Sortie} = C_{Capteur} + C_{Moteur}$$

$C_{moteur}$ étant le couple délivré par le moteur.

$$C_{Moteur} = Cem + J_{Moteur} \cdot \dot{\omega}_{Moteur}$$

$C_{em}$ étant le couple électromagnétique délivré par le moteur.

$$Cem = Kt \cdot Iq$$

Dans ce mode de réalisation, les moyens de calcul du couple de sortie déterminent donc le couple de sortie selon la formule suivante :

$$C_{Sortie} = C_{Capteur} + Kt \cdot Iq + J_{Moteur} \cdot \dot{\omega}_{Moteur}$$

Kt étant la constante de couple électromagnétique du moteur

Iq étant la composante de l'intensité du courant consommé par le moteur qui génère du couple électromagnétique

$J_{moteur}$ étant l'inertie rotorique du rotor

$\dot{\omega}_{Moteur}$ étant l'accélération du rotor dans un repère galiléen.

La visseuse comprend des moyens de détermination de l'accélération ou décélération du rotor dans un repère galiléen.

**Carter fixe**

Le carter de la visseuse peut-être fixe, le repère galiléen étant alors propre au carter.

Les moyens de détermination de la décélération (ou accélération) du rotor comprennent :

- des moyens de mesure 90 de l'angle de rotation du rotor par rapport au stator dans le repère galiléen propre au carter ;
- des moyens de détermination de la dérivée seconde par rapport au temps dudit angle de rotation du rotor par rapport au stator, cette dérivée seconde étant égale à l'accélération ou décélération du rotor dans le repère galiléen propre au carter.

Dans une variante ne mettant pas en oeuvre de moyens de mesure d'angles, les moyens de mesure de l'accélération ou décélération dudit rotor pourront comprendre

- des moyens de mesure $90_1$ de la fréquence de rotation dudit rotor par rapport audit stator dans le repère galiléen propre au carter, et
- des moyens de détermination de la dérivée première par rapport au temps de ladite fréquence de rotation, ladite dérivée première de ladite fréquence de rotation étant égale à l'accélération ou décélération dudit rotor dans le repère galiléen propre au carter.

**Carter mobile**

Dans le cas où la visseuse n'est pas fixe dans l'espace, son carter peut tourner notamment autour de l'axe de rotation du moteur au cours d'un cycle de vissage. L'espace dans lequel se trouve la visseuse constitue alors un repère galiléen.

Pour corriger ce problème propre aux visseuses mobiles et non fixes, les moyens de détermination de la décélération ou accélération du rotor comprennent :

- des moyens de mesure $90_2$ de l'angle de rotation du rotor par rapport au stator dans un repère lié au carter: ces moyens sont identiques à ceux décrits en relation avec les visseuses à élément déformant externe ;
- des moyens de mesure $90_3$ de l'angle de rotation du carter autour de l'axe de l'arbre du rotor dans le repère galiléen externe à la visseuse : il peut par exemple s'agir d'un gyroscope ;
- des moyens de calcul de la somme de l'angle de rotation du rotor par rapport au stator et de l'angle de rotation du carter autour de l'axe de l'arbre du rotor ;
- des moyens de calcul de la dérivée seconde par rapport au temps de cette somme, cette dérivée seconde étant égale à l'accélération ou à la décélération du rotor dans le repère galiléen externe à la visseuse.

Dans une variante, plutôt que de mettre en oeuvre des moyens de calcul de la somme de l'angle de rotation du rotor par rapport au stator et de l'angle de rotation du carter autour de l'axe de l'arbre du rotor, et des moyens de calcul de la dérivée seconde par rapport au temps de cette somme, le dispositif pourra comprendre des moyens de calcul de la dérivée seconde par rapport au temps de l'angle de rotation du rotor par rapport au stator, des moyens de calcul de la dérivée seconde par rapport au temps de l'angle de rotation du carter autour de l'axe de l'arbre du rotor, et des moyens de calcule de la somme de ces dérivées secondes, cette somme étant égale à l'accélération ou à la décélération du rotor dans le repère galiléen externe à la visseuse.

Dans une variante ne mettant pas en oeuvre de moyens de mesure d'angles, les moyens de mesure de l'accélération ou décélération dudit rotor dans un repère galiléen pourront comprendre :

- des moyens de mesure $90_4$ de la fréquence de rotation dudit rotor par rapport audit stator dans un repère lié au carter,
- des moyens de mesure $90_5$ de la fréquence de rotation dudit carter autour de l'axe de rotation dudit rotor dans le repère galiléen externe à la visseuse,
- des moyens de calcul de la somme des fréquences de rotation du rotor et du carter,
- des moyens de calcul de la dérivée première par rapport au temps de la somme des fréquences de rotation, cette dérivée première étant égale à l'accélération ou décélération dudit rotor dans le repère galiléen externe à la visseuse.

Dans une variante, plutôt que de mettre en oeuvre des moyens de calcul de la somme des fréquences de rotation du rotor et du carter, et des moyens de calcul de la dérivée première par rapport au temps de la somme des fréquences de rotation, le dispositif pourra comprendre des moyens de calcul de la dérivée première par rapport au temps de la fréquence de rotation dudit rotor par rapport audit stator dans un repère lié au carter, des moyens de calcul de la dérivée première par rapport au temps de la fréquence de rotation dudit carter autour de l'axe de rotation dudit rotor dans le repère galiléen externe à la visseuse, et des moyens de calcule de la somme de ces dérivées premières, cette somme étant égale à l'accélération ou à la décélération du rotor dans le repère galiléen externe à la visseuse.

Que son carter soit fixe ou mobile, la visseuse comprend un contrôleur tel que celui décrit précédemment. Le programme contenu dans la mémoire de celui-ci sera bien évidemment adapter pour mettre en oeuvre le procédé de détermination du couple de sortie correspondant.

Le mode de réalisation qui vient d'être décrit concerne une visseuse à couronne flottante dont l'arbre de sortie est orthogonal à l'arbre du rotor. Tout comme dans le cas des visseuses à élément déformant externe, une visseuse à couronne flottante peut alternativement présenter un arbre de sortie coaxial ou non coaxial (parallèle et distant) à l'arbre du rotor.

### 6.2. Procédé

### 6.2.1. Principe général

Les visseuses à élément déformant externe ou à couronne flottante selon l'invention permettent de mesurer de manière précise le couple de sortie qu'elles délivrent au niveau de leur arbre de sortie.

L'invention concerne donc également un procédé de détermination du couple de sortie d'un dispositif de vissage.

En référence à la figure 13, un tel procédé de détermination du couple de sortie $C_{sortie}$ délivré par l'arbre de sortie 12 d'un dispositif de vissage comprend de façon générale :

- une mesure 201 de couple $C_{capteur}$ au moyen du capteur de couple comprenant l'élément déformant 16 intégré à la visseuse ;
- une mesure 202 de l'accélération ou décélération du rotor 111 ;
- le calcul 205 du couple de sortie $C_{sortie}$ à partir du couple $C_{capteur}$ mesuré par le capteur de couple et de l'accélération ou décélération mesurée précédemment.

### 6.2.2. Visseuse coaxiale ou non coaxiale à élément déformant externe

### i. Carter fixe

### Mesure d'angle

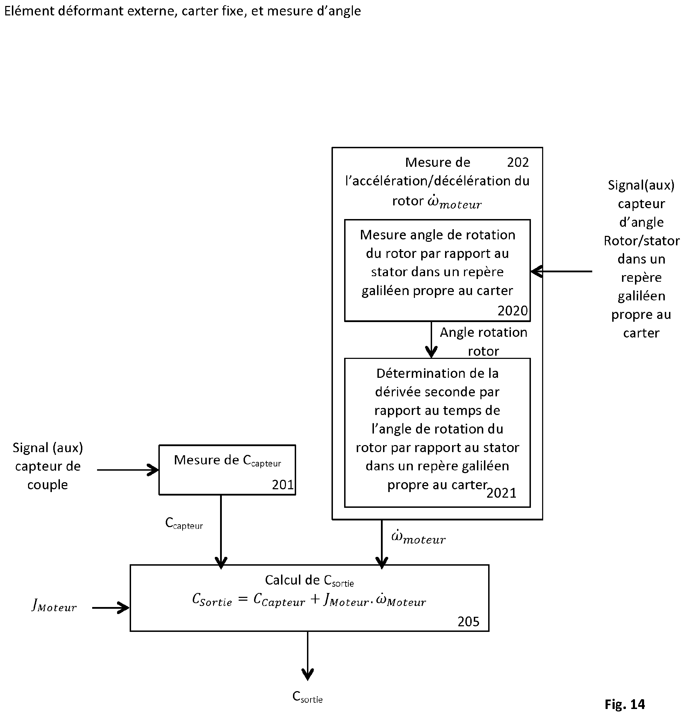

En référence à la figure 14, dans le cas où le carter de la visseuse à élément déformant externe est immobile et constitue un repère galiléen, et des moyens de détermination de l'angle de rotation du rotor 111 par rapport au stator 112 sont mis en oeuvre, l'étape 202 de mesure de l'accélération ou décélération du rotor comprend :

- une étape 2020 de détermination de l'angle de rotation du rotor par rapport au stator par exemple au moyen du capteur 90 dans un repère galiléen propre au carter de la visseuse, et
- une étape 2021 de détermination de la dérivée seconde par rapport au temps de l'angle de rotation du rotor par rapport au stator, la dérivée seconde de l'angle de rotation étant égale à l'accélération ou décélération du rotor dans le repère galiléen propre au carter de la visseuse.

### Mesure de fréquence de rotation

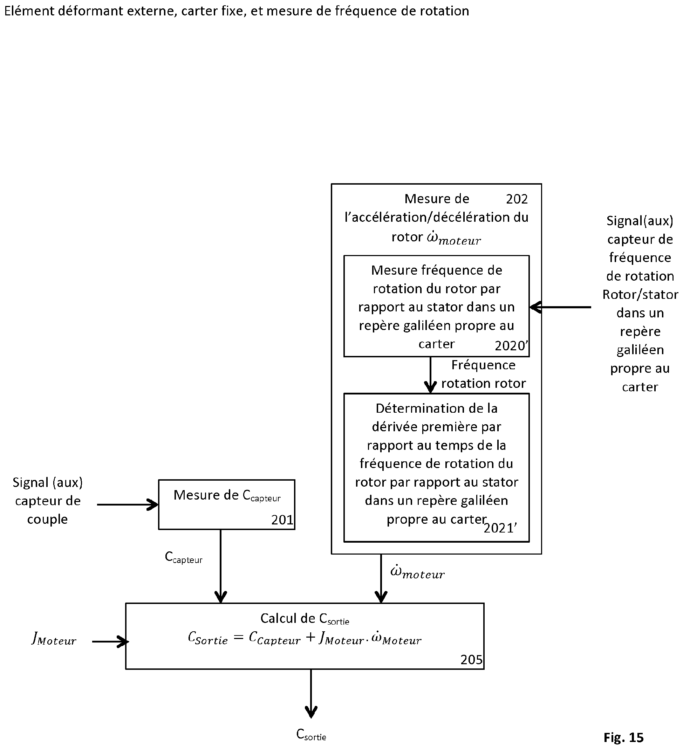

En référence à la figure 15, dans le cas où le carter de la visseuse à élément déformant externe est immobile et constitue un repère galiléen, et un capteur de mesure de la fréquence de rotation du rotor est mis en oeuvre, l'étape 202 de mesure de l'accélération ou décélération du rotor comprend :

- une étape 2020' de mesure de la fréquence de rotation du rotor par rapport au stator dans un repère galiléen propre au carter de la visseuse, au moyen du capteur de fréquence de rotation $90_1$, et
- une étape 2021' de détermination de la dérivée première par rapport au temps de la fréquence de rotation du rotor, la dérivée première de ladite fréquence de rotation étant égale à l'accélération ou décélération dudit rotor dans le repère galiléen propre au carter.

**Calcul du couple de sortie**

Dans ces deux cas, l'étape 205 de calcul du couple de sortie $C_{Sortie}$ applique la formule suivante :

$$C_{Sortie} = C_{Capteur} + J_{Moteur} \cdot \dot{\omega}_{Moteur}$$

$J_{moteur}$ étant l'inertie rotorique dudit rotor
$\dot{\omega}_{Moteur}$ étant l'accélération dudit rotor dans le repère galiléen propre au carter
La constante $J_{moteur}$ est contenue dans la mémoire du contrôleur.

**ii. Carter mobile**

**Mesure d'angle**

**Accélération ou décélération du rotor dans un repère galiléen externe à la visseuse**

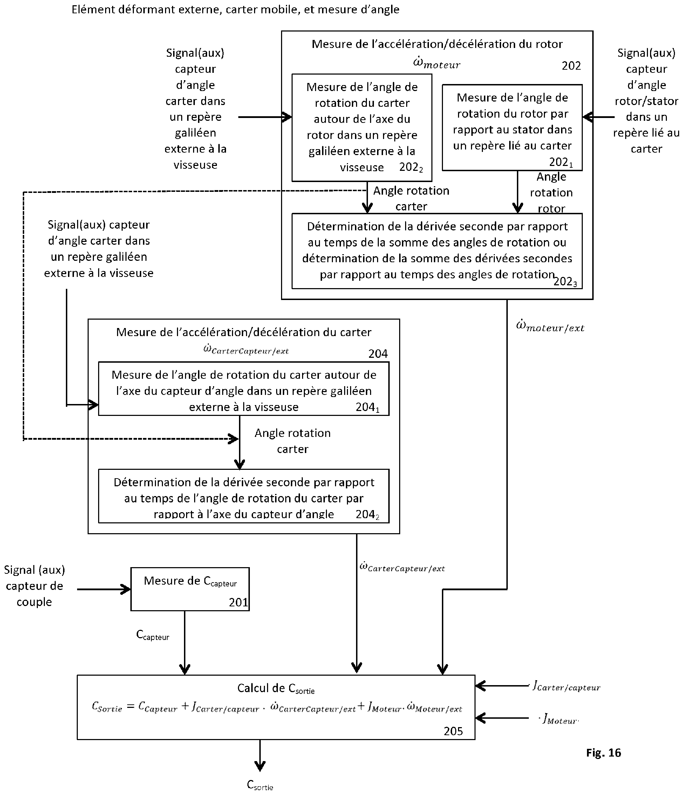

En référence à la figure 16, dans le cas où le carter de la visseuse à élément déformant externe peut bouger dans un repère extérieur galiléen, et des moyens de mesure de l'angle de rotation du carter et de l'angle de rotation du carter sont mis en oeuvre, l'étape 202 de mesure de l'accélération ou décélération du rotor comprend :

- une étape $202_1$ de mesure de l'angle de rotation du rotor par rapport au stator dans un repère lié au carter par exemple au moyen du capteur d'angle $90_2$ ;
- une étape $202_2$ de mesure de l'angle de rotation du carter autour de l'axe du rotor, dans le repère galiléen externe à la visseuse, au moyen du capteur d'angle $90_3$ comme par exemple au moyen du gyroscope ;
- une étape $202_3$ de calcul de la dérivée seconde par rapport au temps de la somme de l'angle de rotation du rotor par rapport au stator dans un repère lié au carter et de l'angle de rotation du carter autour de l'axe du rotor dans le repère galiléen externe à la visseuse, ou de détermination de la dérivée seconde par rapport au temps de l'angle de rotation du rotor par rapport au stator dans un repère lié au carter, de détermination de la dérivée seconde par rapport au temps de l'angle de rotation du carter autour de l'axe du rotor dans le repère galiléen externe à la visseuse et de calcul de la somme desdites dérivées secondes, la dérivée seconde de ladite somme et la sommes desdites dérivées secondes étant toutes les deux égales à l'accélération ou décélération du rotor dans le repère galiléen externe à la visseuse.

**Accélération ou décélération du carter dans un repère galiléen externe à la visseuse**

Le procédé comprend en outre une étape 204 de détermination de l'accélération du carter en rotation autour de l'axe du capteur dans le repère galiléen externe au dispositif de vissage.
Cette étape comprend :

- une étape $204_1$ de détermination de l'angle de rotation dudit carter autour de l'axe dudit capteur dans ledit repère galiléen externe au dispositif de vissage, et
- une étape $204_2$ de détermination de la dérivée seconde par rapport au temps dudit angle de rotation dudit carter autour de l'axe dudit capteur dans ledit repère galiléen externe au dispositif de vissage, ladite dérivée seconde dudit angle de rotation dudit carter autour de l'axe dudit capteur dans ledit repère galiléen externe au dispositif de vissage étant égale à l'accélération ou décélération dudit carter dans ledit repère galiléen externe au dispositif de vissage.

Dans la mesure où l'axe du capteur d'angle est parallèle à l'axe de rotation du rotor, l'angle de rotation du carter autour de l'axe du capteur est identique à l'angle de rotation du carter autour de l'axe du rotor. Les étapes $202_2$ et $204_1$ sont donc identiques.

**Mesure de fréquence de rotation**

**Accélération ou décélération du rotor dans un repère galiléen externe à la visseuse**

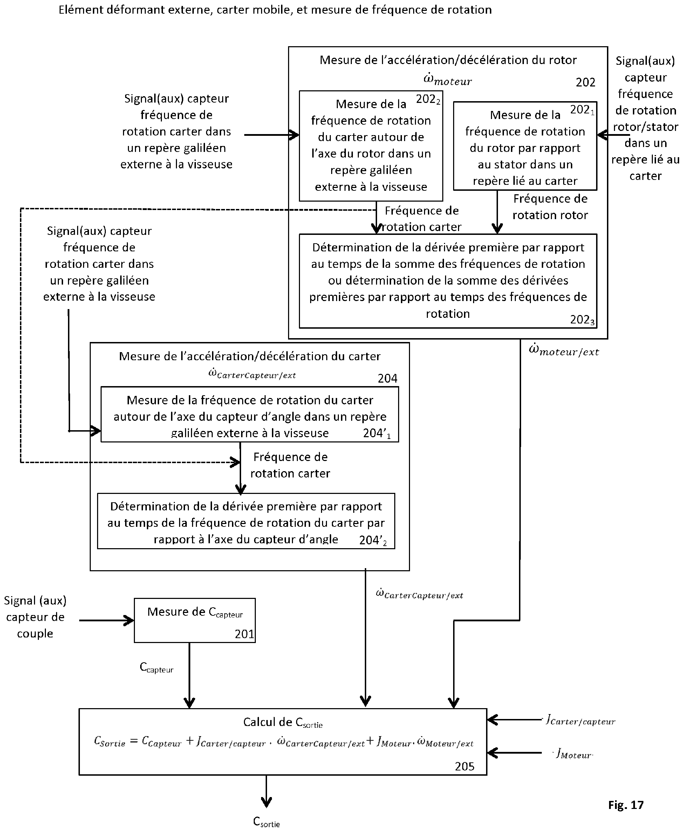

En référence à la figure 17, dans le cas où le carter de la visseuse est mobile dans un repère galiléen externe à la visseuse, et un capteur de mesure de la fréquence de rotation du rotor et de la fréquence de rotation du carter est mis en oeuvre, l'étape 202 de mesure de l'accélération ou décélération du rotor comprend :

- une étape 202'$_1$ de mesure de la fréquence de rotation dudit rotor par rapport audit stator dans un repère lié audit carter au moyen du capteur de fréquence 90$_4$ ;
- une étape 202'$_2$ de mesure de la fréquence de rotation dudit carter autour de l'axe de rotation dudit rotor dans le repère galiléen externe à la visseuse au moyen du capteur 90$_5$ ;
- une étape 202'$_3$ de calcul de la dérivée première par rapport au temps de la somme de la fréquence de rotation dudit rotor par rapport audit stator dans un repère lié audit carter et de la fréquence de rotation dudit carter autour de l'axe de rotation dudit rotor dans le repère galiléen externe à la visseuse, ou de détermination de la dérivée première par rapport au temps de la fréquence de rotation dudit rotor par rapport audit stator dans un repère lié audit carter, de détermination de la dérivée première par rapport au temps de la fréquence de rotation dudit carter autour de l'axe de rotation dudit rotor dans le repère galiléen externe à la visseuse et de calcul de la somme desdites dérivées premières, ladite dérivée première de la somme et ladite sommes des dérivées premières étant toutes les deux égales à l'accélération ou décélération dudit rotor dans le repère galiléen externe à la visseuse.

**Accélération ou décélération du carter dans un repère galiléen externe à la visseuse**

Dans le cas de la prise en considération de la fréquence de rotation du carter, l'étape 204 de détermination de l'accélération du carter en rotation autour de l'axe du capteur dans le repère galiléen externe au dispositif de vissage comprend :

- une étape 204'$_1$ de mesure de la fréquence de rotation du carter autour de l'axe du capteur dans le repère galiléen externe au dispositif de vissage ;
- une étape 204'$_2$ de calcul de la dérivée première par rapport au temps de cette fréquence de rotation, ladite dérivée première de ladite fréquence de rotation étant égale à l'accélération ou décélération dudit carter en rotation autour de l'axe du capteur dans le repère galiléen externe au dispositif de vissage.

Dans la mesure où l'axe du capteur d'angle est parallèle à l'axe de rotation du rotor, la fréquence de rotation du carter autour de l'axe du capteur est identique à la fréquence de rotation du carter autour de l'axe du rotor. Les étapes 202'$_2$ et 204'$_1$ sont donc identiques.

**Calcul du couple de sortie**

Dans ces deux cas, l'étape 205 de calcul du couple de sortie C$_{Sortie}$ applique la formule suivante :

$$C_{Sortie} = C_{Capteur} + J_{Carter/capteur} \cdot \dot{\omega}_{CarterCapteur/ext} + J_{Moteur} \cdot \dot{\omega}_{Moteur/ext}$$

J$_{Carter/capteur}$ étant l'inertie rotorique du carter par rapport à l'axe du capteur.
$\omega_{CarterCapteur/ext}$ étant l'accélération en rotation du carter suivant l'axe du capteur dans le repère galiléen externe à la visseuse
J$_{Moteur}$ étant l'inertie rotorique dudit rotor.
$\omega_{Moteur/ext}$ étant l'accélération du rotor en rotation suivant son axe dans le repère galiléen externe à la visseuse.

Les constantes J$_{Carter/capteur}$, et J$_{moteur}$ sont contenues dans la mémoire du contrôleur.

**6.2.3. Visseuse coaxiale ou non coaxiale à couronne flottante**

**i. Carter fixe**

**Mesure d'angle**

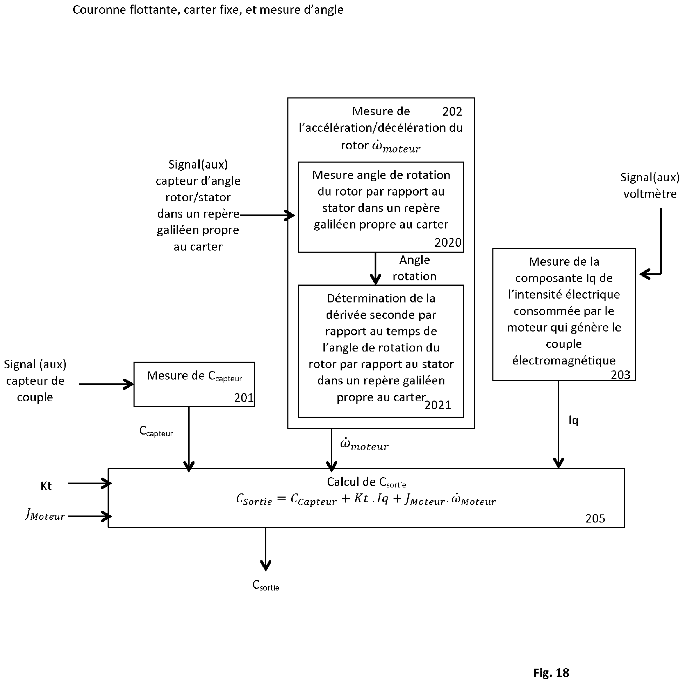

En référence à la figure 18, dans le cas où le carter de la visseuse à couronne flottante est immobile et constitue un repère galiléen, et des moyens de détermination de l'angle de rotation du rotor 111 par rapport au stator 112 sont mis en oeuvre, l'étape 202 de mesure de l'accélération ou décélération du rotor comprend :

- une étape 2020 de détermination de l'angle de rotation rotor par rapport stator par exemple au moyen du capteur 90 dans un repère galiléen propre au carter de la visseuse, et
- une étape 2021 de détermination de la dérivée seconde de l'angle de rotation par rapport au temps, la dérivée seconde de l'angle de rotation étant égale à l'accélération ou décélération du rotor dans le repère galiléen propre au carter de la visseuse.

**Mesure de fréquence de rotation**

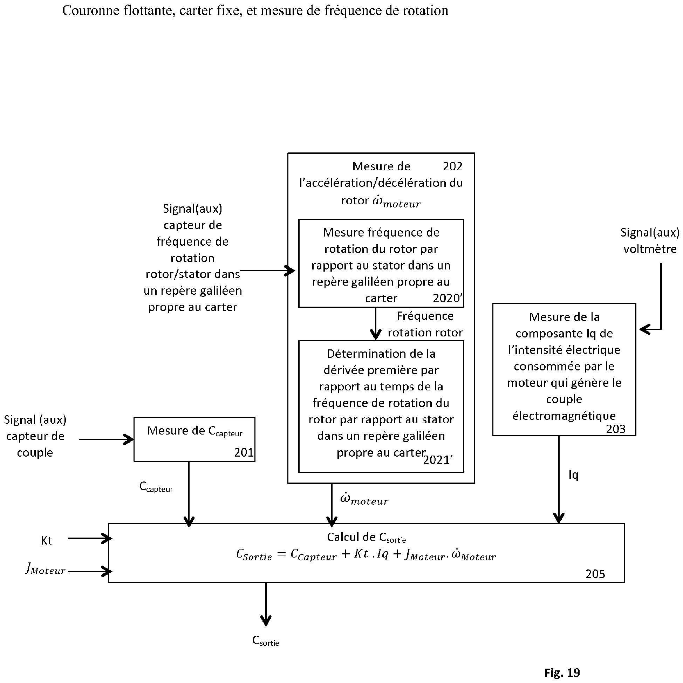

En référence à la figure 19, dans le cas où le carter de la visseuse à couronne flottante est immobile et constitue un repère galiléen, et un capteur de mesure de la fréquence de rotation du rotor est mis en oeuvre, l'étape 202 de mesure de l'accélération ou décélération du rotor comprend :

- une étape 2020' de mesure de la fréquence de rotation du rotor par rapport au stator dans un repère galiléen propre au carter de la visseuse, au moyen du capteur de fréquence de rotation $90_1$, et
- une étape 2021' de détermination de la dérivée première de la fréquence de rotation par rapport au temps, la dérivée première de ladite fréquence de rotation étant égale à l'accélération ou décélération dudit rotor dans le repère galiléen propre au carter.

**Mesure de l'intensité électrique Iq consommée par le moteur**

Lorsque le dispositif de vissage est une visseuse à couronne flottante, que le carter soit fixe ou mobile, le procédé comprend une étape 203 de mesure de la valeur de l'intensité électrique Iq consommée par ledit moteur, plus précisément de la composante de cette intensité qui génère le couple électromagnétique, au moyen du capteur 18.

**Calcul du couple de sortie**

Dans ces deux cas, l'étape 205 de calcul du couple de sortie $C_{Sortie}$ applique la formule suivante :

$$C_{Sortie} = C_{Capteur} + Kt \cdot Iq + J_{Moteur} \cdot \dot{\omega}_{Moteur}$$

Kt étant la constante de couple électromagnétique du moteur
Iq étant la composante de l'intensité du courant consommé par le moteur qui génère du couple électromagnétique
$J_{moteur}$ étant l'inertie rotorique dudit rotor
$\dot{\omega}_{Moteur}$ étant l'accélération dudit rotor dans le repère galiléen propre au carter.

Les constantes Kt et $J_{moteur}$ sont contenues dans la mémoire du contrôleur.

**ii. Carter mobile**

**Mesure d'angle**

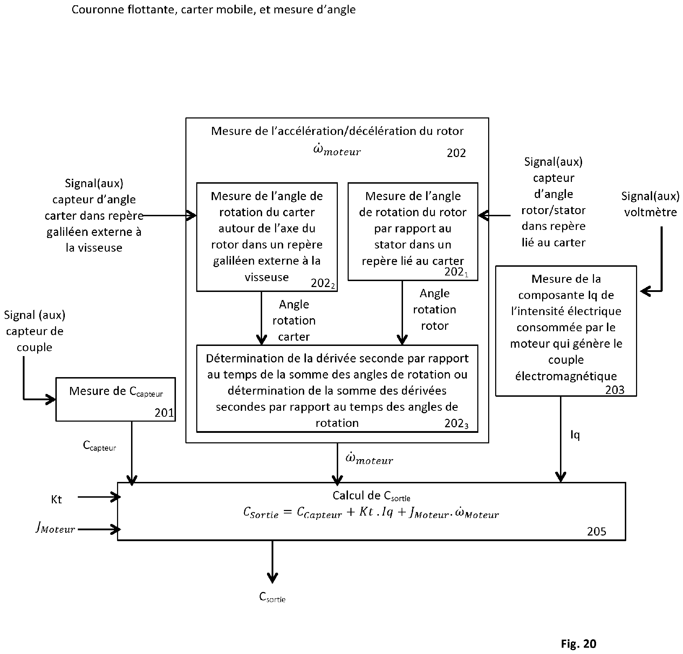

En référence à la figure 20, dans le cas où le carter de la visseuse à couronne flottante externe peut bouger dans un repère extérieur galiléen, et des moyens de mesure de l'angle de rotation du carter sont mis en oeuvre, l'étape 202 de mesure de l'accélération ou décélération du rotor comprend :

- une étape $202_1$ de mesure de l'angle de rotation du rotor par rapport au stator dans un repère lié au carter par exemple au moyen du capteur d'angle $90_2$ ;

- une étape 202₂ de mesure de l'angle de rotation du carter autour de l'axe du rotor, dans le repère galiléen externe à la visseuse, au moyen du capteur d'angle $90_3$ comme par exemple au moyen du gyroscope ;
- une étape $202_3$ de calcul de la dérivée seconde par rapport au temps de la somme de l'angle de rotation du rotor par rapport au stator dans un repère lié au carter et de l'angle de rotation du carter autour de l'axe du rotor dans le repère galiléen externe à la visseuse, ou de détermination de la dérivée seconde par rapport au temps de l'angle de rotation du rotor par rapport au stator dans un repère lié au carter, de détermination de la dérivée seconde par rapport au temps de l'angle de rotation du carter autour de l'axe du rotor dans le repère galiléen externe à la visseuse et de calcul de la somme desdites dérivées secondes, la dérivée seconde de ladite somme et la sommes desdites dérivées secondes étant toutes les deux égales à l'accélération ou décélération du rotor dans le repère galiléen externe à la visseuse.

## Mesure de fréquence de rotation

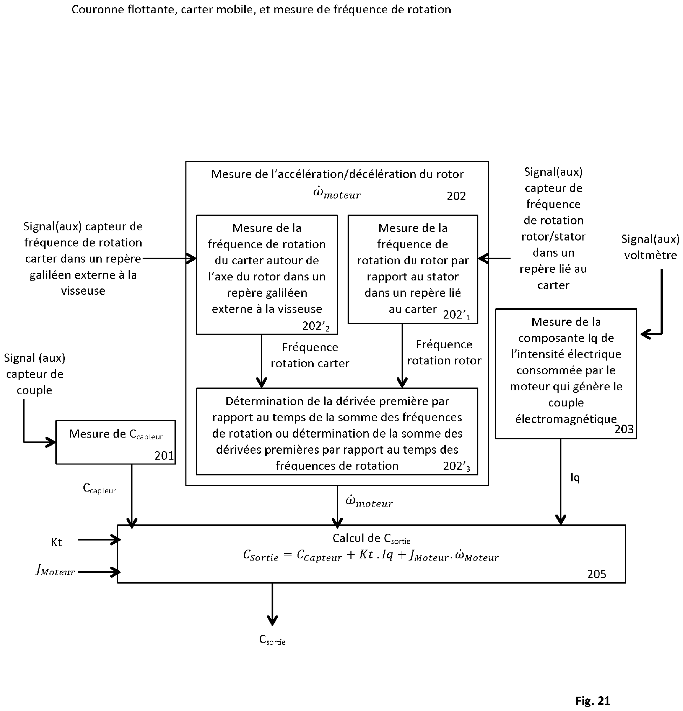

En référence à la figure 21, -dans le cas où le carter de la visseuse à couronne flottante est mobile dans un repère galiléen externe à la visseuse, et un capteur de mesure de la fréquence de rotation du rotor est mis en oeuvre, l'étape 202 de mesure de l'accélération ou décélération du rotor comprend :

- une étape $202'_1$ de mesure de la fréquence de rotation dudit rotor par rapport audit stator dans un repère lié audit carter au moyen du capteur $90_4$ ;
- une étape $202'_2$ de mesure de la fréquence de rotation dudit carter autour de l'axe de rotation dudit rotor dans le repère galiléen externe à la visseuse au moyen du capteur $90_5$ ;
- une étape $202'_3$ de calcul de la dérivée première par rapport au temps de la somme de la fréquence de rotation dudit rotor par rapport audit stator dans un repère lié audit carter et de la fréquence de rotation dudit carter autour de l'axe de rotation dudit rotor dans le repère galiléen externe à la visseuse, ou de détermination de la dérivée première par rapport au temps de la fréquence de rotation dudit rotor par rapport audit stator dans un repère lié audit carter, de détermination de la dérivée première par rapport au temps de la fréquence de rotation dudit carter autour de l'axe de rotation dudit rotor dans le repère galiléen externe à la visseuse et de calcul de la somme desdites dérivées premières, ladite dérivée première de la somme et ladite sommes des dérivées premières étant toutes les deux égales à l'accélération ou décélération dudit rotor dans le repère galiléen externe à la visseuse.

## Mesure de l'intensité électrique Iq consommée par le moteur

Lorsque le dispositif de vissage est une visseuse à couronne flottante, que le carter soit fixe ou mobile, le procédé comprend une étape 203 de mesure de la valeur de l'intensité électrique Iq consommée par ledit moteur, plus précisément de la composante de cette intensité qui génère le couple électromagnétique, au moyen du capteur 18.

## Calcul du couple de sortie

Dans ces deux cas, l'étape 205 de calcul du couple de sortie $C_{Sortie}$ applique la formule suivante :

$$C_{Sortie} = C_{Capteur} + Kt \,.\, Iq + J_{Moteur} \,.\, \dot{\omega}_{Moteur}$$

Kt étant la constante de couple électromagnétique du moteur
Iq étant la composante de l'intensité du courant consommé par le moteur qui génère du couple électromagnétique
$J_{moteur}$ étant l'inertie rotorique dudit rotor
$\dot{\omega}_{Moteur}$ étant l'accélération dudit rotor dans le repère galiléen externe à la visseuse.

Les constantes Kt et $J_{moteur}$ sont contenues dans la mémoire du contrôleur.

## 6.3. Variante et exemples d'applications

De façon connue en soit, les signaux délivrés par les différents capteurs subissent un traitement pour être exploités (normalisation, correction de synchronisme, filtrage...).

Les différents modes de réalisation, qu'ils concernent le dispositif de vissage ou le procédé, sont en tout ou partie combinables.

Les différentes mesures sont préférentiellement réalisées en temps réel, c'est-à-dire en continu. La détermination du couple de sortie est également préférentiellement réalisée en temps réel. Les mesures nécessaires au calcul, à un instant donné, du couple de sortie, sont mesurée simultanément ou quasi simultanément.

La valeur du couple de sortie peut être déterminée et enregistrée dans le compte rendu de vissage à l'issue de la phase de serrage final d'une opération de vissage. Le couple de sortie correspond alors au couple de serrage final. Cela permet pour chaque vissage de connaître de couple de serrage final atteint et ainsi de contrôler la qualité du serrage.

Le couple de sortie peut être déterminé en temps réel au cours d'une opération de vissage et comparé à une ou plusieurs valeurs de seuil prédéterminées notamment en vu de piloter un procédé de vissage. Par exemple, le couple de sortie peut être déterminé en temps réel et comparé à une première valeur de seuil correspondant à la fin de la phase de prévissage puis à une deuxième valeur de seuil prédéterminée correspondant au couple objectif auquel il est souhaité de réaliser un vissage à l'issue d'une phase de serrage final. Dans ce cas, le couple de sortie est utilisé pour piloter le passage de la phase de prévissage à la phase de serrage final puis pour piloter l'arrêt du serrage à la fin de la phase de serrage final.

## Revendications

1. Dispositif de vissage asservis pour la mise en oeuvre d'opérations de vissage comprenant successivement une phase de prévissage, une phase de vissage final jusqu'à l'atteinte d'un couple de serrage objectif auquel il est souhaité de réaliser le vissage, et une étape de freinage, ledit dispositif de vissage comprenant :

   - un moteur électrique comprenant un stator et un rotor ;
   - un arbre de sortie mobile en rotation ;
   - une transmission reliant ledit rotor et ledit arbre de sortie ;
   - des moyens de détermination et d'enregistrement dans un compte rendu de vissage, à l'issue de ladite phase de vissage finale pendant ledit freinage, du couple de sortie $C_{sortie}$ délivré par ledit arbre de sortie, lesdits moyens de détermination du couple de sortie $C_{sortie}$ comprenant :

     - un capteur de couple comprenant un élément déformant intégré au dispositif de vissage, l'axe dudit élément déformant étant parallèle à l'axe dudit rotor ;
     - des moyens de mesure de l'accélération ou décélération dudit rotor ;
     - des moyens de calcul dudit couple de sortie $C_{sortie}$ à partir du couple $C_{capteur}$ mesuré par ledit capteur de couple et de l'accélération ou décélération dudit rotor mesurée par lesdits moyens de mesure de l'accélération ou décélération dudit rotor.

2. Dispositif selon la revendication 1 comprenant un carter fixe dans l'espace, lesdits moyens de mesure de l'accélération ou décélération dudit rotor, dans un repère galiléen propre audit carter, comprenant :

   - des moyens de détermination de l'angle de rotation dudit rotor par rapport audit stator dans ledit repère galiléen propre audit carter, et
   - des moyens de détermination de la dérivée seconde dudit angle de rotation par rapport au temps, ladite dérivée seconde dudit angle de rotation étant représentative de l'accélération ou décélération dudit rotor dans ledit repère galiléen propre audit carter.

3. Dispositif selon la revendication 1 comprenant un carter mobile dans l'espace, lesdits moyens de mesure de l'accélération ou décélération dudit rotor, dans un repère galiléen externe audit dispositif de vissage, comprenant :

   - des moyens de mesure de l'angle de rotation dudit rotor par rapport audit stator dans un repère lié audit carter ;
   - des moyens de mesure de l'angle de rotation dudit carter autour de l'axe dudit rotor dans ledit repère galiléen externe audit dispositif de vissage ;
   - des moyens de calcul de la dérivée seconde par rapport au temps de la somme dudit angle de rotation dudit rotor par rapport audit stator dans ledit repère lié audit carter et dudit angle de rotation dudit carter autour de l'axe dudit rotor dans ledit repère galiléen externe audit dispositif de vissage,
   ou
   des moyens de calcul de la dérivée seconde par rapport au temps dudit angle de rotation dudit rotor par rapport audit stator dans ledit repère lié audit carter, des moyens de détermination de la dérivée seconde par rapport au temps dudit angle de rotation dudit carter autour de l'axe dudit rotor dans ledit repère galiléen externe audit dispositif de vissage, et des moyens de calcul de la somme de ces deux dérivées secondes,

ladite dérivée seconde de ladite somme et la somme desdites dérivées secondes étant toutes les deux égales à l'accélération ou décélération dudit rotor dans ledit repère galiléen externe au dispositif de vissage.

4. Dispositif selon la revendication 1 comprenant un carter fixe dans l'espace, lesdits moyens de mesure de l'accélération ou décélération dudit rotor, dans un repère galiléen propre audit carter, comprenant :

- des moyens de mesure de la fréquence de rotation dudit rotor par rapport audit stator dans ledit repère galiléen propre audit carter, et
- des moyens de détermination de la dérivée première de ladite fréquence de rotation par rapport au temps, ladite dérivée première de ladite fréquence de rotation étant égale à l'accélération ou décélération dudit rotor dans ledit repère galiléen propre audit carter.

5. Dispositif selon la revendication 1 comprenant un carter mobile dans l'espace, lesdits moyens de mesure de l'accélération ou décélération dudit rotor, dans un repère galiléen externe audit dispositif de vissage, comprenant :

- des moyens de mesure de la fréquence de rotation dudit rotor par rapport audit stator dans un repère lié audit carter ;
- des moyens de mesure de la fréquence de rotation dudit carter autour de l'axe de rotation dudit rotor dans ledit repère galiléen externe audit dispositif de vissage ;
- des moyens de détermination de la dérivée première par rapport au temps de la somme desdites fréquences de rotation du rotor et du carter,
ou
des moyens de détermination de la dérivée première par rapport au temps de ladite fréquence de rotation dudit rotor, des moyens de détermination de la dérivée première par rapport au temps de ladite fréquence de rotation dudit carter, et des moyens de détermination de la somme de la sommes desdites dérivées première par rapport au temps des fréquences de rotation dudit rotor et dudit carter,

ladite dérivée première de la somme desdits fréquences de rotation ou la somme desdites dérivées premières étant égale à l'accélération ou décélération dudit rotor dans ledit repère galiléen externe audit dispositif de vissage.

6. Dispositif selon l'une quelconque des revendications 1 à 5 dans lequel ladite transmission comprend au moins un train épicycloïdal muni d'une couronne, ledit élément déformant dudit capteur de couple étant lié en rotation à ladite couronne.

7. Dispositif selon la revendication 6 dans lequel ladite couronne est montée flottante à l'intérieur dudit carter et arrêtée en rotation par rapport audit carter par l'intermédiaire dudit élément déformant dudit capteur de couple, ledit élément déformant étant lié en rotation audit carter.

8. Dispositif selon la revendication 7 comprenant des moyens de mesure de la valeur de l'intensité électrique Iq consommée par ledit moteur, lesdits moyens de calcul dudit couple de sortie $C_{sortie}$ déterminant ledit couple de sortie à partir du couple $C_{capteur}$ mesuré par ledit capteur de couple, de l'accélération ou décélération dudit rotor mesurée par lesdits moyens de mesure de l'accélération ou décélération dudit rotor et de l'intensité électrique Iq mesurée par lesdits moyens de mesure de la valeur de l'intensité électrique consommée par ledit moteur.

9. Dispositif selon la revendication 8 dans lequel lesdits moyens de calcul dudit couple de sortie $C_{Sortie}$ déterminent le couple de sortie selon la formule suivante :

$$C_{Sortie} = C_{Capteur} + Kt \cdot Iq + J_{Moteur} \cdot \dot{\omega}_{Moteur}$$

Kt étant la constante de couple électromagnétique du moteur
Iq étant la composante de l'intensité du courant consommé par le moteur qui génère du couple électromagnétique
$J_{moteur}$ étant l'inertie rotorique dudit rotor
$\dot{\omega}_{Moteur}$ étant l'accélération dudit rotor dans ledit repère galiléen propre audit carter ou extérieur audit dispositif.

10. Dispositif selon la revendication 6, comprenant une platine de fixation dudit dispositif sur un bâti extérieur, ladite couronne étant liée en rotation audit carter d'une part et liée à la platine de fixation d'autre part par l'intermédiaire dudit élément déformant.

**11.** Dispositif selon la revendication 10 comprenant un carter fixe dans l'espace, dans lequel lesdits moyens de calcul dudit couple de sortie $C_{Sortie}$ déterminent le couple de sortie selon la formule suivante :

$$C_{Sortie} = C_{Capteur} + J_{Moteur} \cdot \dot{\omega}_{Moteur}$$

$J_{moteur}$ étant l'inertie rotorique dudit rotor
$\dot{\omega}_{Moteur}$ étant l'accélération dudit rotor dans ledit repère galiléen propre audit carter.

**12.** Dispositif selon la revendication 10 comprenant un carter mobile dans l'espace, ledit dispositif comprenant des moyens de détermination de l'accélération dudit carter en rotation autour de l'axe dudit capteur dans ledit repère galiléen externe au dispositif de vissage.

**13.** Dispositif selon la revendication 12 dans lequel lesdits moyens de détermination de l'accélération dudit carter en rotation autour de l'axe dudit capteur dans ledit repère galiléen externe au dispositif de vissage comprennent :

- des moyens de détermination de l'angle de rotation dudit carter autour de l'axe dudit capteur dans ledit repère galiléen externe au dispositif de vissage, et
- des moyens de détermination de la dérivée seconde par rapport au temps dudit angle de rotation dudit carter autour de l'axe dudit capteur dans ledit repère galiléen externe au dispositif de vissage, ladite dérivée seconde dudit angle de rotation dudit carter autour de l'axe dudit capteur dans ledit repère galiléen externe au dispositif de vissage étant égale à l'accélération ou décélération dudit carter dans ledit repère galiléen externe au dispositif de vissage.

**14.** Dispositif selon la revendication 12 dans lequel lesdits moyens de détermination de l'accélération dudit carter en rotation autour de l'axe dudit capteur dans ledit repère galiléen externe au dispositif de vissage comprennent :

- des moyens de mesure de la fréquence de rotation dudit carter autour de l'axe dudit capteur dans ledit repère galiléen externe au dispositif de vissage, et
- des moyens de détermination de la dérivée première par rapport au temps de ladite fréquence de rotation dudit carter autour de l'axe dudit capteur dans ledit repère galiléen externe au dispositif de vissage, ladite dérivée première de ladite fréquence de rotation dudit carter autour de l'axe dudit capteur dans ledit repère galiléen externe au dispositif de vissage étant égale à l'accélération ou décélération dudit carter dans ledit repère galiléen externe au dispositif de vissage.

**15.** Dispositif selon l'une quelconque des revendications 12 à 14, dans lequel lesdits moyens de calcul dudit couple de sortie $C_{Sortie}$ déterminent le couple de sortie selon la formule suivante :

$$C_{Sortie} = C_{Capteur} + J_{Carter/capteur} \cdot \dot{\omega}_{CarterCapteur/ext} + J_{Moteur} \cdot \dot{\omega}_{Moteur/ext}$$

$J_{Carter/capteur}$ étant l'inertie rotorique du carter par rapport à l'axe du capteur
$\dot{\omega}_{CarterCapteur/ext}$ étant l'accélération en rotation du carter suivant l'axe du capteur dans ledit repère galiléen externe au dispositif de vissage
$J_{Moteur}$ étant l'inertie rotorique dudit rotor
$\dot{\omega}_{Moteur/ext}$ étant l'accélération du rotor en rotation suivant son axe dans ledit repère galiléen externe au dispositif de vissage.

**16.** Procédé de détermination, au cours d'une opération de vissage comprenant successivement une phase de prévissage, une phase de vissage final jusqu'à l'atteinte d'un couple de serrage objectif auquel il est souhaité de réaliser le vissage, et une étape de freinage, du couple de sortie $C_{sortie}$ délivré par l'arbre de sortie d'un dispositif de vissage asservi comprenant un moteur électrique comprenant un stator et un rotor et une transmission reliant ledit rotor audit arbre de sortie,
ledit procédé comprenant :

- une étape de mesure d'un couple $C_{capteur}$ au moyen d'un capteur de couple comprenant un élément déformant intégré au dispositif de vissage, l'axe dudit élément déformant étant parallèle à l'axe dudit rotor ;
- une étape de mesure de l'accélération ou décélération dudit rotor $\dot{\omega}_{rotor}$;

- une étape de calcul dudit couple de sortie $C_{sortie}$ à partir du couple $C_{capteur}$ mesuré par ledit capteur de couple et de l'accélération ou décélération dudit rotor $\omega_{rotor}$.
- une étape d'enregistrement dudit couple de sortie $C_{sortie}$ dans un compte rendu de vissage ;

ladite étape de calcul et ladite étape d'enregistrement étant mises en oeuvre à l'issue de ladite phase de vissage final pendant ledit freinage.

**Patentansprüche**

1. Gesteuerte Schraubvorrichtung für die Durchführung von Schraubvorgängen, welche nacheinander eine Phase des Vorverschraubens, eine Phase des endgültigen Verschraubens bis zum Erreichen eines Ziel-Anzugsdrehmoments, mit dem die Verschraubung durchgeführt werden soll, und einen Schritt des Bremsens umfasst, wobei die Schraubvorrichtung umfasst:

   - einen Elektromotor, der einen Stator und einen Rotor umfasst;
   - eine drehbewegliche Abtriebswelle;
   - ein Getriebe, das den Rotor und die Abtriebswelle verbindet;
   - Mittel zur Bestimmung und Eintragung in einen Verschraubungs-Bericht, am Ende der Phase des endgültigen Verschraubens während des Bremsens, des von der Abtriebswelle gelieferten Abtriebsdrehmoments $C_{sortie}$, wobei die Mittel zur Bestimmung des Abtriebsdrehmoments $C_{sortie}$ umfassen:
   - einen Drehmomentsensor, der ein in die Schraubvorrichtung integriertes verformendes Element umfasst, wobei die Achse des verformenden Elements parallel zur Achse des Rotors ist;
   - Mittel zur Messung der Beschleunigung oder Verzögerung des Rotors;
   - Mittel zur Berechnung des Abtriebsdrehmoments $C_{sortie}$ aus dem von dem Drehmomentsensor gemessenen Drehmoment $C_{capteur}$ und der von den Mitteln zur Messung der Beschleunigung oder Verzögerung des Rotors gemessenen Beschleunigung oder Verzögerung des Rotors.

2. Vorrichtung nach Anspruch 1, welche ein im Raum feststehendes Gehäuse umfasst, wobei die Mittel zur Messung der Beschleunigung oder Verzögerung des Rotors in einem zum Gehäuse gehörigen Inertialsystem umfassen:

   - Mittel zur Bestimmung des Drehwinkels des Rotors bezüglich des Stators in dem zum Gehäuse gehörigen Inertialsystem, und
   - Mittel zur Bestimmung der zweiten Ableitung dieses Drehwinkels nach der Zeit, wobei die zweite Ableitung dieses Drehwinkels für die Beschleunigung oder Verzögerung des Rotors in dem zum Gehäuse gehörigen Inertialsystem repräsentativ ist.

3. Vorrichtung nach Anspruch 1, welche ein im Raum bewegliches Gehäuse umfasst, wobei die Mittel zur Messung der Beschleunigung oder Verzögerung des Rotors in einem bezüglich der Schraubvorrichtung externen Inertialsystem umfassen:

   - Mittel zur Messung des Drehwinkels des Rotors bezüglich des Stators in einem mit dem Gehäuse verbundenen Koordinatensystem;
   - Mittel zur Messung des Drehwinkels des Gehäuses um die Achse des Rotors in dem bezüglich der Schraubvorrichtung externen Inertialsystem;
   - Mittel zur Berechnung der zweiten Ableitung der Summe des Drehwinkels des Rotors bezüglich des Stators in dem mit dem Gehäuse verbundenen Koordinatensystem und des Drehwinkels des Gehäuses um die Achse des Rotors in dem bezüglich der Schraubvorrichtung externen Inertialsystem nach der Zeit,

   oder
   Mittel zur Berechnung der zweiten Ableitung des Drehwinkels des Rotors bezüglich des Stators in dem mit dem Gehäuse verbundenen Koordinatensystem nach der Zeit, Mittel zur Bestimmung der zweiten Ableitung des Drehwinkels des Gehäuses um die Achse des Rotors in dem bezüglich der Schraubvorrichtung externen Inertialsystem nach der Zeit und Mittel zur Berechnung der Summe dieser zwei zweiten Ableitungen,
   wobei die zweite Ableitung der Summe und die Summe der zweiten Ableitungen beide gleich der Beschleunigung oder Verzögerung des Rotors in dem bezüglich der Schraubvorrichtung externen Inertialsystem sind.

4. Vorrichtung nach Anspruch 1, welche ein im Raum feststehendes Gehäuse umfasst, wobei die Mittel zur Messung der Beschleunigung oder Verzögerung des Rotors in einem zum Gehäuse gehörigen Inertialsystem umfassen:

- Mittel zur Messung der Drehfrequenz des Rotors bezüglich des Stators in dem zum Gehäuse gehörigen Inertialsystem, und
- Mittel zur Bestimmung der ersten Ableitung dieser Drehfrequenz nach der Zeit, wobei die erste Ableitung dieser Drehfrequenz gleich der Beschleunigung oder Verzögerung des Rotors in dem zum Gehäuse gehörigen Inertialsystem ist.

5. Vorrichtung nach Anspruch 1, welche ein im Raum bewegliches Gehäuse umfasst, wobei die Mittel zur Messung der Beschleunigung oder Verzögerung des Rotors in einem bezüglich der Schraubvorrichtung externen Inertialsystem umfassen:

- Mittel zur Messung der Drehfrequenz des Rotors bezüglich des Stators in einem mit dem Gehäuse verbundenen Koordinatensystem;
- Mittel zur Messung der Drehfrequenz des Gehäuses um die Drehachse des Rotors in dem bezüglich der Schraubvorrichtung externen Inertialsystem;
- Mittel zur Bestimmung der ersten Ableitung der Summe dieser Drehfrequenzen des Rotors und des Gehäuses nach der Zeit,

oder
Mittel zur Bestimmung der ersten Ableitung der Drehfrequenz des Rotors nach der Zeit, Mittel zur Bestimmung der ersten Ableitung der Drehfrequenz des Gehäuses nach der Zeit und Mittel zur Bestimmung der Summe der ersten Ableitungen der Drehfrequenzen des Rotors und des Gehäuses nach der Zeit, wobei die erste Ableitung der Summe der Drehfrequenzen oder die Summe der ersten Ableitungen gleich der Beschleunigung oder Verzögerung des Rotors in dem bezüglich der Schraubvorrichtung externen Inertialsystem ist.

6. Vorrichtung nach einem der Ansprüche 1 bis 5, wobei das Getriebe einen Planetengetriebezug umfasst, der mit einem Hohlrad versehen ist, wobei das verformende Element des Drehmomentsensors drehfest mit dem Hohlrad verbunden ist.

7. Vorrichtung nach Anspruch 6, wobei das Hohlrad im Inneren des Gehäuses schwimmend gelagert ist und über das verformende Element des Drehmomentsensors gegen Rotation bezüglich des Gehäuses arretiert ist, wobei das verformende Element drehfest mit dem Gehäuse verbunden ist.

8. Vorrichtung nach Anspruch 7, welche Mittel zur Messung des Wertes der von dem Motor aufgenommenen Stromstärke lq umfasst, wobei die Mittel zur Berechnung des Abtriebsdrehmoments $C_{sortie}$ das Abtriebsdrehmoment aus dem von dem Drehmomentsensor gemessenen Drehmoment $C_{capteur}$, der von den Mitteln zur Messung der Beschleunigung oder Verzögerung des Rotors gemessenen Beschleunigung oder Verzögerung des Rotors und der von den Mitteln zur Messung des Wertes der von dem Motor aufgenommenen Stromstärke gemessenen Stromstärke lq bestimmen.

9. Vorrichtung nach Anspruch 8, wobei die Mittel zur Berechnung des Abtriebsdrehmoments $C_{Sortie}$ das Abtriebsdrehmoment gemäß der folgenden Formel bestimmen:

$$C_{Sortie} = C_{Capteur} + Kt.lq + J_{Moteur}.\dot{\omega}_{Moteur},$$

wobei Kt die Konstante des elektromagnetischen Drehmoments des Motors ist,
lq die Komponente der vom Motor aufgenommenen Stromstärke ist, welche elektromagnetisches Drehmoment erzeugt,
$J_{moteur}$ die Rotorträgheit des Rotors ist,
$\omega_{Moteur}$ die Beschleunigung des Rotors in dem zum Gehäuse gehörigen oder bezüglich der Vorrichtung externen Inertialsystem ist.

10. Vorrichtung nach Anspruch 6, welche eine Platte zur Befestigung der Vorrichtung an einem äußeren Gestell umfasst, wobei das Hohlrad einerseits mit dem Gehäuse drehfest verbunden und andererseits mit der Befestigungsplatte über das verformende Element verbunden ist.

**11.** Vorrichtung nach Anspruch 10, welche ein im Raum feststehendes Gehäuse umfasst, wobei die Mittel zur Berechnung des Abtriebsdrehmoments $C_{Sortie}$ das Abtriebsdrehmoment gemäß der folgenden Formel bestimmen:

$$C_{Sortie} = C_{Capteur} + J_{Moteur}.\dot{\omega}_{Moteur},$$

wobei $J_{moteur}$ die Rotorträgheit des Rotors ist,
$\dot{\omega}_{Moteur}$ die Beschleunigung des Rotors in dem zum Gehäuse gehörigen Inertialsystem ist.

**12.** Vorrichtung nach Anspruch 10, welche ein im Raum bewegliches Gehäuse umfasst, wobei die Vorrichtung Mittel zur Bestimmung der Beschleunigung des um die Achse des Sensors rotierenden Gehäuses in dem bezüglich der Schraubvorrichtung externen Inertialsystem umfasst.

**13.** Vorrichtung nach Anspruch 12, wobei die Mittel zur Bestimmung der Beschleunigung des um die Achse des Sensors rotierenden Gehäuses in dem bezüglich der Schraubvorrichtung externen Inertialsystem umfassen:

- Mittel zur Bestimmung des Drehwinkels des Gehäuses um die Achse des Sensors in dem bezüglich der Schraubvorrichtung externen Inertialsystem, und
- Mittel zur Bestimmung der zweiten Ableitung des Drehwinkels des Gehäuses um die Achse des Sensors in dem bezüglich der Schraubvorrichtung externen Inertialsystem nach der Zeit, wobei die zweite Ableitung des Drehwinkels des Gehäuses um die Achse des Sensors in dem bezüglich der Schraubvorrichtung externen Inertialsystem gleich der Beschleunigung oder Verzögerung des Gehäuses in dem bezüglich der Schraubvorrichtung externen Inertialsystem ist.

**14.** Vorrichtung nach Anspruch 12, wobei die Mittel zur Bestimmung der Beschleunigung des um die Achse des Sensors rotierenden Gehäuses in dem bezüglich der Schraubvorrichtung externen Inertialsystem umfassen:

- Mittel zur Messung der Drehfrequenz des Gehäuses um die Achse des Sensors in dem bezüglich der Schraubvorrichtung externen Inertialsystem, und
- Mittel zur Bestimmung der ersten Ableitung der Drehfrequenz des Gehäuses um die Achse des Sensors in dem bezüglich der Schraubvorrichtung externen Inertialsystem nach der Zeit, wobei die erste Ableitung der Drehfrequenz des Gehäuses um die Achse des Sensors in dem bezüglich der Schraubvorrichtung externen Inertialsystem gleich der Beschleunigung oder Verzögerung des Gehäuses in dem bezüglich der Schraubvorrichtung externen Inertialsystem ist.

**15.** Vorrichtung nach einem der Ansprüche 12 bis 14, wobei die Mittel zur Berechnung des Abtriebsdrehmoments $C_{Sortie}$ das Abtriebsdrehmoment gemäß der folgenden Formel bestimmen:

$$C_{Sortie} = C_{Capteur} + J_{Carter/capteur}.\dot{\omega}_{CarterCapteur/ext}$$
$$+ J_{Moteur}.\dot{\omega}_{Moteur/ext},$$

wobei $J_{Carter/capteur}$ die Rotorträgheit des Gehäuses bezüglich der Achse des Sensors ist,
$\dot{\omega}_{CarterCapteur/ext}$ die Beschleunigung der Rotation des Gehäuses entlang der Achse des Sensors in dem bezüglich der Schraubvorrichtung externen Inertialsystem ist,
$J_{Moteur}$ die Rotorträgheit des Rotors ist,
$\dot{\omega}_{Moteur/ext}$ die Beschleunigung der Rotation des Rotors entlang seiner Achse in dem bezüglich der Schraubvorrichtung externen Inertialsystem ist.

**16.** Verfahren zur Bestimmung, während eines Schraubvorgangs, welcher nacheinander eine Phase des Vorverschraubens, eine Phase des endgültigen Verschraubens bis zum Erreichen eines Ziel-Anzugsdrehmoments, mit dem die Verschraubung durchgeführt werden soll, und einen Schritt des Bremsens umfasst, des Abtriebsdrehmoments $C_{sortie}$, das von der Abtriebswelle einer gesteuerten Schraubvorrichtung geliefert wird, die einen Elektromotor, der einen Stator und einen Rotor umfasst, und ein Getriebe, das den Rotor mit der Abtriebswelle verbindet, umfasst, wobei das Verfahren umfasst:

- einen Schritt der Messung eines Drehmoments $C_{capteur}$ mittels eines Drehmomentsensors, der ein in die Schraubvorrichtung integriertes verformendes Element umfasst, wobei die Achse des verformenden Elements parallel zur Achse des Rotors ist;
- einen Schritt der Messung der Beschleunigung oder Verzögerung des Rotors $\dot{\omega}_{rotor}$;
- einen Schritt der Berechnung des Abtriebsdrehmoments $C_{sortie}$ aus dem von dem Drehmomentsensor gemessenen Drehmoment $C_{capteur}$ und der Beschleunigung oder Verzögerung des Rotors $\dot{\omega}_{rotor}$;
- einen Schritt der Eintragung des Abtriebsdrehmoments $C_{sortie}$ in einen Verschraubungs-Bericht;

wobei der Schritt der Berechnung und der Schritt der Eintragung am Ende der Phase des endgültigen Verschraubens während des Bremsens durchgeführt werden.

## Claims

1. Controlled screwing device for implementing screwing operations successively comprising a pre-screwing phase, a final screwing phase to reach a desired target tightening torque to which the screwing is to take place, and a braking step, said screwing device comprising:

   - an electric motor comprising a stator and a rotor;
   - a drive shaft capable of moving in rotation;
   - a coupling connecting said rotor to said drive shaft;
   - means for determining and recording in a screwing report, at the end of said final screwing phase during said braking, an output torque $T_{output}$ applied by said drive shaft, said means for determining the output torque $T_{output}$ comprising:

      -- a torque sensor comprising a deforming element integrated into the screwing device, the axis of said deforming element being parallel to the axis of said rotor;
      -- means for measuring the acceleration or deceleration of said rotor;
      -- means for calculating said output torque $T_{output}$ from the torque $T_{sensor}$ measured by said torque sensor and from the acceleration or deceleration of said rotor measured by said means for measuring the acceleration or deceleration of said rotor.

2. Device according to claim 1, comprising a casing that is fixed in space, said means for measuring the acceleration or deceleration of said rotor, in a Galilean reference frame specific to said casing, comprising:

   - means for determining the rotation angle of said rotor relative to said stator in said Galilean reference frame specific to said casing, and
   - means for determining the second derivative of said rotation angle with respect to time, said second derivative of said rotation angle representing the acceleration or deceleration of said rotor in said Galilean reference frame specific to said casing.

3. Device according to claim 1, comprising a casing that is capable of moving in space, said means for measuring the acceleration or deceleration of said rotor, in a Galilean reference frame external to said screwing device, comprising:

   - means for measuring the rotation angle of said rotor relative to said stator in a reference frame linked to said casing;
   - means for measuring the rotation angle of said casing about the axis of said rotor in said Galilean reference frame external to said screwing device;
   - means for calculating the second derivative with respect to time of the sum of said rotation angle of said rotor relative to said stator in said reference frame linked to said casing and of said rotation angle of said casing about the axis of said rotor in said Galilean reference frame external to said screwing device,

   or
   means for calculating the second derivative with respect to time of said rotation angle of said rotor relative to said stator in said reference frame linked to said casing, means for determining the second derivative with respect to time of said rotation angle of said casing about the axis of said rotor in said Galilean reference frame external to said screwing device, and means for calculating the sum of these two second derivatives,
   said second derivative of said sum and the sum of said second derivatives both being equal to the acceleration or deceleration of said rotor in said Galilean reference frame external to the screwing device.

4. Device according to claim 1, comprising a casing that is fixed in space, said means for measuring the acceleration or deceleration of said rotor, in a Galilean reference frame specific to said casing, comprising:

- means for measuring the rotation frequency of said rotor relative to said stator in said Galilean reference frame specific to said casing, and
- means for determining the first derivative of said rotation frequency with respect to time, said first derivative of said rotation frequency being equal to the acceleration or deceleration of said rotor in said Galilean reference frame specific to said casing.

5. Device according to claim 1, comprising a casing that is capable of moving in space, said means for measuring the acceleration or deceleration of said rotor, in a Galilean reference frame external to said screwing device, comprising:

- means for measuring the rotation frequency of said rotor relative to said stator in a reference frame linked to said casing;
- means for measuring the rotation frequency of said casing about the axis of rotation of said rotor in said Galilean reference frame external to said screwing device;
- means for determining the first derivative with respect to time of the sum of said rotation frequencies of the rotor and of the casing,

or
means for determining the first derivative with respect to time of said rotation frequency of said rotor, means for determining the first derivative with respect to time of said rotation frequency of said casing, and means for determining the sum of the sums of said first derivatives with respect to time of the rotation frequencies of said rotor and of said casing,
said first derivative of the sum of said rotation frequencies or the sum of said first derivatives being equal to the acceleration or deceleration of said rotor in said Galilean reference frame external to said screwing device.

6. Device according to any of claims 1 to 5, wherein said coupling comprises at least one planetary gearset provided with a ring, said deforming element of said torque sensor being rotationally linked to said ring.

7. Device according to claim 6, wherein said ring is mounted such that it floats inside said casing and is stopped in rotation relative to said casing by said deforming element of said torque sensor, said deforming element being rotationally linked to said casing.

8. Device according to claim 7, comprising means for measuring the value of the current intensity Iq consumed by said motor, said means for calculating said output torque $T_{output}$ determining said output torque from the torque $T_{sensor}$ measured by said torque sensor, the acceleration or deceleration of said rotor measured by said means for measuring the acceleration or deceleration of said rotor and the current intensity Iq measured by said means for measuring the value of the current intensity consumed by said motor.

9. Device according to claim 8, wherein said means for calculating said output torque $T_{output}$ determine the output torque according to the following formula:

$$T_{Output} = T_{Sensor} + Kt.Iq + J_{Motor}.\dot{\omega}_{Motor}$$

where Kt is the electromagnetic torque constant of the motor
Iq is the component of the current intensity consumed by the motor that generates the electromagnetic torque
$J_{Motor}$ is the rotor inertia of said rotor
$\dot{\omega}_{Motor}$ is the acceleration of said rotor in said Galilean reference frame specific to said casing or external to said device.

10. Device according to claim 6, comprising a plate for attaching said device to an external frame, said ring being rotationally linked to said casing on the one hand, and linked to the attaching plate on the other hand via said deforming element.

11. Device according to claim 10, comprising a casing that is fixed in space, wherein said means for calculating said output torque $T_{output}$ determine the output torque according to the following formula:

$$T_{Output} = T_{Sensor} + J_{Motor} \cdot \dot{\omega}_{Motor}$$

$J_{Motor}$ is the rotor inertia of said rotor

$\dot{\omega}_{Motor}$ is the acceleration of said rotor in said Galilean reference frame specific to said casing.

12. Device according to claim 10, comprising a casing that is capable of moving in space, said device comprising means for determining the acceleration of said casing in rotation about the axis of said sensor in said Galilean reference frame external to the screwing device.

13. Device according to claim 12, wherein said means for determining the acceleration of said casing in rotation about the axis of said sensor in said Galilean reference frame external to the screwing device comprise:

   - means for determining the rotation angle of said casing about the axis of said sensor in said Galilean reference frame external to the screwing device, and
   - means for determining the second derivative with respect to time of said rotation angle of said casing about the axis of said sensor in said Galilean reference frame external to the screwing device, said second derivative of said rotation angle of said casing about the axis of said sensor in said Galilean reference frame external to the screwing device being equal to the acceleration or deceleration of said casing in said Galilean reference frame external to the screwing device.

14. Device according to claim 12, wherein said means for determining the acceleration of said casing in rotation about the axis of said sensor in said Galilean reference frame external to the screwing device comprise:

   - means for measuring the rotation frequency of said casing about the axis of said sensor in said Galilean reference frame external to the screwing device, and
   - means for determining the first derivative with respect to time of said rotation frequency of said casing about the axis of said sensor in said Galilean reference frame external to the screwing device, said first derivative of said rotation frequency of said casing about the axis of said sensor in said Galilean reference frame external to the screwing device being equal to the acceleration or deceleration of said casing in said Galilean reference frame external to the screwing device.

15. Device according to any of claims 12 to 14, wherein said means for calculating said output torque $T_{output}$ determine the output torque according to the following formula:

$$T_{Output} = T_{Sensor} + J_{Casing/sensor} \cdot \dot{\omega}_{CasingSensor/ext} + J_{Motor} \cdot \dot{\omega}_{Motor/ext}$$

   where $J_{Casing/sensor}$ is the rotor inertia relative to the axis of the sensor
   $\dot{\omega}_{CasingSensor/ext}$ is the rotational acceleration of the casing along the axis of the sensor in said Galilean reference frame external to the screwing device
   $J_{Motor}$ is the rotor inertia of said rotor
   $\dot{\omega}_{Motor/ext}$ is the rotational acceleration of the rotor along the axis thereof in said Galilean reference frame external to the screwing device.

16. Method for determining, during a screwing operation successively comprising a pre-screwing phase, a final screwing phase to reach a desired target tightening torque to which the screwing is to take place, and a braking step, the output torque $T_{output}$ applied by the drive shaft of a controlled screwing device comprising an electric motor comprising a stator and a rotor and a coupling connecting said rotor to said drive shaft, said method comprising:

   - a step of measuring a torque $T_{sensor}$ by means of a torque sensor comprising a deforming element integrated into the screwing device, the axis of said deforming element being parallel to the axis of said rotor $\dot{\omega}_{Rotor}$;
   - a step of measuring the acceleration or deceleration of said rotor;
   - a step of calculating said output torque $T_{output}$ from the torque $T_{sensor}$ measured by said torque sensor and from the acceleration or deceleration of said rotor $\dot{\omega}_{Rotor}$;
   - a step of recording said output torque $T_{output}$ in a screwing report;

said calculation step and said recording step being implemented at the end of said final screwing phase during said braking.

**Fig. 1**

**Fig. 2**

EP 3 287 237 B1

Fig. 3

Fig. 4

**Fig. 5**

**Fig. 5 bis**

Couple (N.m)

- - - - - Capteur dispositif
——— Capteur étalon

Temps (s)

T1          T2          **Fig. 6**

Couple (N.m)

- - - - - Capteur dispositif
——— Capteur étalon

T2

Temps (s)

**Fig. 6 bis**

Fig. 7

Fig. 8

Fig. 9

Fig. 10

Fig. 11

**Fig. 12**

Principe général

| | |
|---|---|
| Signal (aux) capteur de couple | → |

Mesure de $C_{capteur}$

201

$C_{capteur}$

Mesure de l'accélération/décélération du rotor $\dot{\omega}_{moteur}$

202

Signal(aux) moyens de mesure $\dot{\omega}_{moteur}$

$\dot{\omega}_{moteur}$

Calcul de $C_{sortie}$ en fonction de $C_{capteur}$ et de $\dot{\omega}_{moteur}$

205

$C_{sortie}$

**Fig. 13**

Elément déformant externe, carter fixe, et mesure d'angle

Mesure de          202
l'accélération/décélération du
rotor $\dot{\omega}_{moteur}$

Signal(aux)
capteur
d'angle
Rotor/stator
dans un
repère
galiléen
propre au
carter

Mesure angle de rotation
du rotor par rapport au
stator dans un repère
galiléen propre au carter
2020

Angle rotation
rotor

Détermination de la
dérivée seconde par
rapport au temps de
l'angle de rotation du
rotor par rapport au stator
dans un repère galiléen
propre au carter 2021

Signal (aux)
capteur de
couple

Mesure de C$_{capteur}$
201

C$_{capteur}$

$\dot{\omega}_{moteur}$

Calcul de C$_{sortie}$
$$C_{Sortie} = C_{Capteur} + J_{Moteur}.\dot{\omega}_{Moteur}$$
205

$J_{Moteur}$

C$_{sortie}$

Fig. 14

Elément déformant externe, carter fixe, et mesure de fréquence de rotation

Mesure de          202
l'accélération/décélération du
rotor $\dot{\omega}_{moteur}$

Mesure fréquence de
rotation du rotor par
rapport au stator dans un
repère galiléen propre au
carter          2020'

Signal(aux)
capteur de
fréquence
de rotation
Rotor/stator
dans un
repère
galiléen
propre au
carter

Fréquence
rotation rotor

Détermination de la
dérivée première par
rapport au temps de la
fréquence de rotation du
rotor par rapport au stator
dans un repère galiléen
propre au carter
2021'

$\dot{\omega}_{moteur}$

Signal (aux)
capteur de
couple

Mesure de C$_{capteur}$

201

C$_{capteur}$

$J_{Moteur}$

Calcul de C$_{sortie}$

$$C_{Sortie} = C_{Capteur} + J_{Moteur} \cdot \dot{\omega}_{Moteur}$$

205

C$_{sortie}$

Fig. 15

Elément déformant externe, carter mobile, et mesure d'angle

**Mesure de l'accélération/décélération du rotor**

$\dot{\omega}_{moteur}$     202

Signal(aux) capteur d'angle carter dans un repère galiléen externe à la visseuse →

Mesure de l'angle de rotation du carter autour de l'axe du rotor dans un repère galiléen externe à la visseuse   $202_2$

Mesure de l'angle de rotation du rotor par rapport au stator dans un repère lié au carter   $202_1$

← Signal(aux) capteur d'angle rotor/stator dans un repère lié au carter

Angle rotation carter

Angle rotation rotor

Détermination de la dérivée seconde par rapport au temps de la somme des angles de rotation ou détermination de la somme des dérivées secondes par rapport au temps des angles de rotation $202_3$

Signal(aux) capteur d'angle carter dans un repère galiléen externe à la visseuse

$\dot{\omega}_{moteur/ext}$

**Mesure de l'accélération/décélération du carter**

$\dot{\omega}_{CarterCapteur/ext}$     204

Mesure de l'angle de rotation du carter autour de l'axe du capteur d'angle dans un repère galiléen externe à la visseuse   $204_1$

Angle rotation carter

Détermination de la dérivée seconde par rapport au temps de l'angle de rotation du carter par rapport à l'axe du capteur d'angle   $204_2$

Signal (aux) capteur de couple →

Mesure de $C_{capteur}$

201

$C_{capteur}$

$\dot{\omega}_{CarterCapteur/ext}$

**Calcul de $C_{sortie}$**

$$C_{Sortie} = C_{Capteur} + J_{Carter/capteur} \cdot \dot{\omega}_{CarterCapteur/ext} + J_{Moteur} \cdot \dot{\omega}_{Moteur/ext}$$

205

← $J_{Carter/capteur}$

← $J_{Moteur}$

**Fig. 16**

$C_{sortie}$

Elément déformant externe, carter mobile, et mesure de fréquence de rotation

Mesure de l'accélération/décélération du rotor

$\dot\omega_{moteur}$  202

Signal(aux) capteur fréquence de rotation carter dans un repère galiléen externe à la visseuse

Signal(aux) capteur fréquence de rotation rotor/stator dans un repère lié au carter

Mesure de la 202₂ fréquence de rotation du carter autour de l'axe du rotor dans un repère galiléen externe à la visseuse

Mesure de la 202₁ fréquence de rotation du rotor par rapport au stator dans un repère lié au carter

Fréquence de rotation carter

Fréquence de rotation rotor

Signal(aux) capteur fréquence de rotation carter dans un repère galiléen externe à la visseuse

Détermination de la dérivée première par rapport au temps de la somme des fréquences de rotation ou détermination de la somme des dérivées premières par rapport au temps des fréquences de rotation

202₃

$\dot\omega_{moteur/ext}$

Mesure de l'accélération/décélération du carter

$\dot\omega_{CarterCapteur/ext}$  204

Mesure de la fréquence de rotation du carter autour de l'axe du capteur d'angle dans un repère galiléen externe à la visseuse    204'₁

Fréquence de rotation carter

Détermination de la dérivée première par rapport au temps de la fréquence de rotation du carter par rapport à l'axe du capteur d'angle    204'₂

$\dot\omega_{CarterCapteur/ext}$

Signal (aux) capteur de couple

Mesure de $C_{capteur}$

201

$C_{capteur}$

Calcul de $C_{sortie}$

$$C_{Sortie} = C_{Capteur} + J_{Carter/capteur} \cdot \dot\omega_{CarterCapteur/ext} + J_{Moteur} \cdot \dot\omega_{Moteur/ext}$$

205

$J_{Carter/capteur}$

$\cdot J_{Moteur}$

$C_{sortie}$

**Fig. 17**

Couronne flottante, carter fixe, et mesure d'angle

Signal(aux)
capteur d'angle
rotor/stator
dans un repère
galiléen propre
au carter

Mesure de          202
l'accélération/décélération du
rotor $\dot{\omega}_{moteur}$

Mesure angle de rotation
du rotor par rapport au
stator dans un repère
galiléen propre au carter
2020

Angle
rotation

Détermination de la
dérivée seconde par
rapport au temps de
l'angle de rotation du
rotor par rapport au stator
dans un repère galiléen
propre au carter 2021

Signal(aux)
voltmètre

Mesure de la
composante Iq de
l'intensité électrique
consommée par le
moteur qui génère le
couple
électromagnétique
203

Signal (aux)
capteur de
couple

Mesure de $C_{capteur}$
201

$C_{capteur}$

$\dot{\omega}_{moteur}$

Iq

Kt

$J_{Moteur}$

Calcul de $C_{sortie}$

$$C_{Sortie} = C_{Capteur} + Kt \cdot Iq + J_{Moteur} \cdot \dot{\omega}_{Moteur}$$

205

$C_{sortie}$

**Fig. 18**

Couronne flottante, carter fixe, et mesure de fréquence de rotation

Mesure de 202
l'accélération/décélération du
rotor $\dot{\omega}_{moteur}$

| Mesure fréquence de rotation du rotor par rapport au stator dans un repère galiléen propre au carter 2020' |

Signal(aux)
capteur de
fréquence de
rotation
rotor/stator dans
un repère galiléen
propre au carter

Fréquence
rotation rotor

Signal(aux)
voltmètre

| Détermination de la dérivée première par rapport au temps de la fréquence de rotation du rotor par rapport au stator dans un repère galiléen propre au carter 2021' |

Mesure de la
composante Iq de
l'intensité électrique
consommée par le
moteur qui génère le
couple
électromagnétique
203

Signal (aux)
capteur de
couple

| Mesure de C$_{capteur}$ 201 |

C$_{capteur}$

$\dot{\omega}_{moteur}$

Iq

Calcul de C$_{sortie}$

$$C_{Sortie} = C_{Capteur} + Kt . Iq + J_{Moteur} . \dot{\omega}_{Moteur}$$

205

Kt

$J_{Moteur}$

C$_{sortie}$

**Fig. 19**

EP 3 287 237 B1

Couronne flottante, carter mobile, et mesure d'angle

Mesure de l'accélération/décélération du rotor
$\dot{\omega}_{moteur}$    202

Signal(aux)
capteur d'angle
carter dans repère
galiléen externe à
la visseuse

Signal(aux)
capteur
d'angle
rotor/stator
dans repère
lié au carter

Signal(aux)
voltmètre

Mesure de l'angle de
rotation du carter
autour de l'axe du
rotor dans un repère
galiléen externe à la
visseuse   202₂

Mesure de l'angle
de rotation du rotor
par rapport au
stator dans un
repère lié au carter
202₁

Mesure de la
composante Iq de
l'intensité électrique
consommée par le
moteur qui génère le
couple
électromagnétique
203

Signal (aux)
capteur de
couple

Angle
rotation
carter

Angle
rotation
rotor

Mesure de C_capteur
201

Détermination de la dérivée seconde par rapport
au temps de la somme des angles de rotation ou
détermination de la somme des dérivées
secondes par rapport au temps des angles de
rotation   202₃

C_capteur

$\dot{\omega}_{moteur}$

Iq

Calcul de C_sortie
$C_{Sortie} = C_{Capteur} + Kt \cdot Iq + J_{Moteur} \cdot \dot{\omega}_{Moteur}$
205

Kt

$J_{Moteur}$

C_sortie

Fig. 20

49

Couronne flottante, carter mobile, et mesure de fréquence de rotation

Mesure de l'accélération/décélération du rotor

$\dot{\omega}_{moteur}$      202

Signal(aux) capteur de fréquence de rotation carter dans un repère galiléen externe à la visseuse

Mesure de la fréquence de rotation du carter autour de l'axe du rotor dans un repère galiléen externe à la visseuse    $202'_2$

Mesure de la fréquence de rotation du rotor par rapport au stator dans un repère lié au carter    $202'_1$

Signal(aux) capteur de fréquence de rotation rotor/stator dans un repère lié au carter

Signal(aux) voltmètre

Fréquence rotation carter

Fréquence rotation rotor

Mesure de la composante Iq de l'intensité électrique consommée par le moteur qui génère le couple électromagnétique    203

Signal (aux) capteur de couple

Détermination de la dérivée première par rapport au temps de la somme des fréquences de rotation ou détermination de la somme des dérivées premières par rapport au temps des fréquences de rotation    $202'_3$

Mesure de $C_{capteur}$    201

$C_{capteur}$

$\dot{\omega}_{moteur}$

Iq

Kt

$J_{Moteur}$

Calcul de $C_{sortie}$

$$C_{Sortie} = C_{Capteur} + Kt \cdot Iq + J_{Moteur} \cdot \dot{\omega}_{Moteur}$$

205

$C_{sortie}$

**Fig. 21**